# EUROPEAN PATENT SPECIFICATION

(11) **EP 3 842 662 B1**
(45) Date of publication and mention of the grant of the patent: **12.04.2023**
(21) Application number: 20205984.6
(22) Date of filing: 05.11.2020
(51) Int. Cl.: F16H 57/04, F16H 3/089, F16H 63/18, F16H 63/32

(54) **TRANSMISSION AND VEHICLE**
GETRIEBE UND FAHRZEUG
TRANSMISSION ET VÉHICULE

(30) Priority: 23.12.2019 JP 2019231907
(43) Date of publication of application: 30.06.2021
(73) Proprietor: YAMAHA HATSUDOKI KABUSHIKI KAISHA, Iwata-shi Shizuoka 438-8501 (JP)
(72) Inventor: NANAHOSHI, Takuma, Iwata-shi, Shizuoka-ken 438-8501 (JP)
(74) Representative: Grünecker Patent- und Rechtsanwälte PartG mbB

(56) References cited:
- CN-U- 205 937 794
- DE-A1- 3 903 253
- DE-A1-102009 028 383
- JP-A- 2007 032 649
- US-B1- 7 285 052

## Description

The present invention relates to a transmission according to the preamble of the independent claim 1 and a vehicle. Such a transmission can be taken from the prior art document DE 39 03 253 A1.

So-called dog-clutch type stepped transmissions have been used in vehicles such as motorcycles, for example. A dog-clutch type stepped transmission includes a drive shaft to be driven by a drive source such as an internal combustion engine, a driven shaft, a plurality of drive gears that are provided on the drive shaft, and a plurality of driven gears that are provided on the driven shaft and are respectively in mesh with the drive gears. With a dog-clutch type stepped transmission, the gear ratio is changed by changing the combination of a drive gear and a driven gear between which power is transmitted.

With an example of a dog-clutch type stepped transmission, at least one of the driven gears is a movable gear that is unrotatable relative to the driven shaft and movable in the axial direction of the driven shaft, and a driven gear adjacent to this driven gear is a fixed gear that is rotatable relative to the driven shaft and unmovable in the axial direction of the driven shaft. Each movable gear includes protruding portions that protrude toward a fixed gear, and each fixed gear includes depressed portions that engage with the protruding portions. The protruding portions and the depressed portions are called dogs. The transmission further includes shift forks for axially moving the movable gears, a shift fork shaft for axially movably supporting the shift forks, and a shift drum for axially moving the shift forks. A fixed gear receives a driving force from a drive gear that meshes with the fixed gear. However, the fixed gear is rotatable relative to the driven shaft. When the dogs of a movable gear and the dogs of a fixed gear are not in mesh with each other, the fixed gear idles, and the driving force of the drive gear is not transmitted to the driven shaft. On the other hand, when a shift fork moves a movable gear toward a fixed gear, the dogs of the movable gear and the dogs of the fixed gear mesh with each other. In such a case, the driving force of the drive gear is transmitted to the driven shaft through the fixed gear and the movable gear.

With another example of a dog-clutch type stepped transmission (see, for example, JP 2011-112 197 A), the drive gears are supported on the drive shaft so as to be unrotatable and axially unmovable relative to the drive shaft. The driven gears are supported on the driven shaft so as to be axially unmovable and rotatable relative to the driven shaft. The transmission includes slide rings that are attached to the driven shaft so as to be axially movable and unrotatable relative to the driven shaft, and shift forks for axially moving the slide rings, a shift fork shaft for axially movably supporting the shift forks, and a shift drum for axially moving the shift forks. Each driven gear includes dogs that protrude in the axial direction. Each slide ring includes engagement holes into which dogs are inserted. When a slide ring is moved toward a driven gear, the engagement holes of the slide ring engage with the dogs of the driven gear, thereby allowing for transmission of power between the driven gear and the slide ring. Then, power is transmitted in the following order: the drive shaft, the drive gear, the driven gear, the slide ring, and the driven shaft.

In the first example described above, when a movable gear rotates, the movable gear slides on a shift fork. The shift fork includes a slidable portion that slides on the movable gear. In the second example described above, a slide ring slides on a shift fork. The shift fork includes a slidable portion that slides on the slide ring. In either one of the examples, there is a need to supply oil to the slidable portion of the shift fork.

For example, JP 2007-139 070 A describes providing an oil supply pipe separately from the shift fork shaft, and spraying oil from the oil supply pipe to the slidable portion of the shift fork. However, since oil cannot be supplied directly to the slidable portion of the shift fork, the amount of oil supply tends to be insufficient. Moreover, machining of the oil supply pipe is difficult, and the number of parts and the size of the transmission are likely to be large.

On the other hand, JP 2007-32649 A discloses a transmission, wherein oil is supplied directly to the slidable portion of the shift fork. As shown in FIG. 17, with the transmission disclosed in JP 2007-32649 A, an oil supply path 402 is formed inside a shift fork shaft 400. An oil passage port 401 extending in the radial direction is formed in the shift fork shaft 400. A shift fork 410 includes a boss portion 411 into which the shift fork shaft 400 is inserted, a plate portion 412 extending radially outward from the boss portion 411, and an oil path 413 formed in the boss portion 411 and the plate portion 412.

A depressed portion 414 is formed on the inner circumferential surface of the boss portion 411. The depressed portion 414 communicates with the oil passage port 401 of the shift fork shaft 400 and the oil path 413 of the shift fork 410. The depressed portion 414 serves to guide oil from the oil passage port 401 to the oil path 413. Oil flows through the oil passage port 401, the depressed portion 414 and the oil path 413 in this order, and is supplied directly to the slidable portion (not shown) of the shift fork 410.

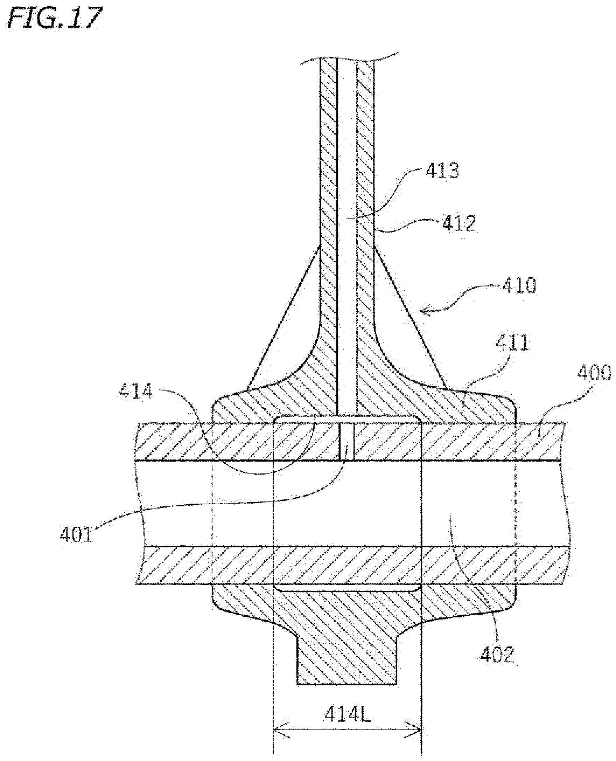

Now, the shift fork 410 moves in the axial direction of the shift fork shaft 400 (the left-right direction in FIG. 17). The dimension 414L of the depressed portion 414 in the axial direction is large so that the depressed portion 414 and the oil passage port 401 are always in communication with each other even if the position of the shift fork 410 in the axial direction changes. When the shift fork 410 is assembled to the shift fork shaft 400, the circumferential position of the shift fork 410 on the shift fork shaft 400 may be misaligned. The depressed portion 414 is formed so as to extend in the circumferential direction across the entire inner circumferential surface of the boss portion 411 so that the depressed portion 414 and the oil passage port 401 are always in communication with each other even if the circumferential position of the shift fork 410 is misaligned.

As described above, with the transmission described above, the depressed portion 414 is formed on the inner circumferential surface of the boss portion 411. In addition, the depressed portion 414 is formed so as to extend over a relatively wide extent in the axial direction and extend across the entire extent in the circumferential direction. Machining of the depressed portion 414 is not easy. The depressed portion 414 is machined by using a machining method (e.g., boring) different from the machining method used for other parts of the shift fork shaft 400. This results in a need to switch machining tools for machining the depressed portion 414. Thus, the transmission described above requires more time and higher cost for machining the depressed portion 414.

An object of the present invention is to provide a transmission and a vehicle having the same, with which oil can be supplied from a shift fork shaft to a slidable portion of a shift fork and with which it is possible to reduce time and cost for machining an inner circumferential surface of a boss portion of the shift fork. According to the present invention said object is solved by a transmission having the features of the independent claim 1. Preferred embodiments are laid down in the dependent claims.

A transmission disclosed herein includes: a first rotating shaft; a second rotating shaft arranged parallel to the first rotating shaft; a first gear attached to the first rotating shaft so as to be unrotatable relative to the first rotating shaft; a second gear that is attached to the second rotating shaft so as to be rotatable and axially unmovable relative to the second rotating shaft and is in mesh with the first gear; a movable member that is attached to the second rotating shaft so as to be unrotatable and axially movable relative to the second rotating shaft and is adjacent to the second gear in an axial direction; a shift fork shaft arranged parallel to the first rotating shaft and the second rotating shaft; and a shift fork that includes a cylindrical boss portion through which the shift fork shaft is inserted and that is attached to the shift fork shaft so as to be axially movable relative to the shift fork shaft and configured to move the movable member in the axial direction. One of the second gear and the movable member includes an engagement protruding portion that protrudes in the axial direction, and the other one of the second gear and the movable member includes an engagement depressed portion that detachably engages with the engagement protruding portion. The shift fork shaft includes an oil supply path that is formed inside the shift fork shaft and extends in the axial direction, a circumferential groove that is formed on an outside of the shift fork shaft so as to make a complete round around the shift fork shaft, and an oil supply hole that extends in a radial direction so as to connect between the oil supply path and the circumferential groove. An oil hole extending in the radial direction is formed in the boss portion of the shift fork. The boss portion includes an inner circumferential surface, wherein a depressed portion that is connected to the oil hole is formed on the inner circumferential surface. The depressed portion is formed to extend in a circumferential direction over an extent of 180° or less of the inner circumferential surface and overlaps with the circumferential groove of the shift fork shaft.

With the transmission described above, the depressed portion of the boss portion of the shift fork is formed to extend in the circumferential direction only over an extent of 180° or less, and it is therefore possible to easily machine the depressed portion as compared with a case where the depressed portion is formed to extend across the entire circumference. For example, by holding a rotating bite against the inner circumferential surface of the boss portion, it is possible to machine the depressed portion without rotating the shift fork. Where the depressed portion is formed only over a partial extent in the circumferential direction, the depressed portion may become misaligned with the oil supply hole of the shift fork shaft if the circumferential position of the shift fork on the shift fork shaft is misaligned. Then, oil may no longer be guided to the oil hole of the boss portion from the oil supply hole of the shift fork shaft. With the transmission described above, however, the circumferential groove, which is connected to the oil supply hole, is formed on the outside of the shift fork shaft. Even if the circumferential position of the shift fork on the shift fork shaft is misaligned, the depressed portion always overlaps with the circumferential groove. Therefore, with the depressed portion, the oil supply hole of the shift fork shaft and the oil hole of the boss portion can communicate with each other through the circumferential groove. Thus, although the depressed portion of the boss portion is formed only over a partial extent in the circumferential direction, oil can be desirably guided from the oil supply hole of the shift fork shaft to the oil hole of the boss portion. As a result, oil can be desirably supplied to the slidable portion of the shift fork. Thus, with the transmission described above, it is possible to supply oil directly to the slidable portion of the shift fork from the shift fork shaft and it is possible to reduce time and cost for machining the inner circumferential surface of the boss portion of the shift fork.

According to one preferred embodiment, the depressed portion is formed in a crescent shape as seen on a cross section perpendicular to the axial direction of the boss portion.

According to the embodiment described above, the depressed portion can be machined by using a T-slot cutter, or the like. It is easy to machine the depressed portion.

According to one preferred embodiment, a circumferential dimension of the depressed portion is larger than a diameter of the oil supply hole of the shift fork shaft.

According to the embodiment described above, since the dimension of the depressed portion is relatively large, oil can be supplied smoothly to the oil hole of the boss portion from the oil supply hole of the shift fork shaft.

According to one preferred embodiment, as seen on a cross section perpendicular to the axial direction of the boss portion, the depressed portion is formed over an extent of 45° to 90° around a center of the boss portion.

According to the embodiment described above, since the extent of the depressed portion is not too small, oil can be supplied smoothly from the oil supply hole of the shift fork shaft to the oil hole of the boss portion. Since the extent of the depressed portion is not too large, it is easy to machine the depressed portion.

According to one preferred embodiment, a depth of the depressed portion is deeper than a depth of the circumferential groove.

According to the embodiment described above, since the depth of the depressed portion is relatively deep, oil can be supplied smoothly to the oil hole of the boss portion from the oil supply hole of the shift fork shaft.

According to one preferred embodiment, as seen on a cross section that includes an axial line of the shift fork shaft, the circumferential groove includes a bottom surface that is parallel to the axial line of the shift fork shaft, and an inclined surface that is inclined relative to the bottom surface so as to extend away from the bottom surface while extending outward in the radial direction of the shift fork shaft. The oil supply hole is open on the bottom surface.

According to the embodiment described above, since the oil supply hole is formed on the bottom surface that is parallel to the axial line of the shift fork shaft, it is easy to machine the oil supply hole. Since the circumferential groove has the inclined surface, oil can be guided smoothly from the oil supply hole to the depressed portion of the shift fork.

According to one preferred embodiment, the shift fork shaft includes another oil supply hole extending in the radial direction that is formed on an opposite side from the oil supply hole with respect to an axial line of the shift fork shaft and connects between the oil supply path and the circumferential groove.

According to the embodiment described above, since the shift fork shaft includes another oil supply hole in addition to the oil supply hole, a sufficient amount of oil can be supplied from the oil supply path inside the shift fork shaft.

According to one preferred embodiment, a diameter of the oil supply hole of the shift fork shaft is smaller than a diameter of the oil hole of the boss portion.

Oil supplied from the oil supply hole of the shift fork shaft is once guided to the circumferential groove, and then supplied to the depressed portion and the oil hole of the boss portion. Oil is temporarily stored in the circumferential groove. Therefore, even if the diameter of the oil supply hole of the shift fork shaft is smaller than the diameter of the oil hole of the boss portion, as in the embodiment described above, oil can be desirably supplied to the oil hole of the boss portion.

According to one preferred embodiment, the movable member is an annular member arranged concentric with the second rotating shaft. The annular member is not in mesh with the first gear attached to the first rotating shaft.

According to the embodiment described above, the annular member does not need teeth for meshing with the first gear attached to the first rotating shaft. Therefore, as compared with a case where the movable member is a gear that meshes with the first gear attached to the first rotating shaft, it is possible to reduce the thickness of the movable member. Therefore, it is possible to reduce the size of the transmission.

According to one preferred embodiment, the engagement protruding portion is formed on the second gear. The engagement depressed portion is a through hole formed in the annular member.

According to the embodiment described above, it is possible to reduce the thickness of the annular member. Therefore, it is possible to reduce the size of the transmission.

A vehicle disclosed herein includes: the transmission described above; a drive source that is linked to the first rotating shaft and drives the first rotating shaft; a power transmitting member that is linked to the second rotating shaft; and a driving wheel that is linked to the power transmitting member.

### ADVANTAGEOUS EFFECTS OF INVENTION

According to the present invention, it is possible to provide a transmission and a vehicle having the same, with which oil can be supplied to the slidable portion of the shift fork from the shift fork shaft and with which it is possible to reduce time and cost for machining the inner circumferential surface of the boss portion of the shift fork.

### BRIEF DESCRIPTION OF DRAWINGS

FIG. 1 is a side view of a motorcycle according to an embodiment.
FIG. 2 is a cross-sectional view of an internal combustion engine of the motorcycle.
FIG. 3 is a cross-sectional view of a part of a transmission.
FIG. 4 is a front view of a part of a transmission.
FIG. 5a is a front view of a slide ring, and FIG. 5b is a cross-sectional view taken along line Vb-Vb of FIG. 5a.
FIG. 6a is a front view of a collar, and FIG. 6b is a cross-sectional view taken along line Vlb-Vlb of FIG. 6a.
FIG. 7 is a view of a slide ring and a driven gear as seen along the axial direction.
FIG. 8 is a cross-sectional view of another portion of the transmission.
FIG. 9 is a plan view of a shift fork shaft.
FIG. 10 is a cross-sectional view showing the vicinity of a first end portion of the shift fork shaft.
FIG. 11 is a cross-sectional view showing the vicinity of a second end portion of the shift fork shaft.
FIG. 12 is a front view of a shift fork.
FIG. 13 is a cross-sectional view taken along line XIII-XIII of FIG. 12.
FIG. 14 is an enlarged cross-sectional view of a portion of the shift fork shaft and the shift fork.
FIG. 15 is a cross-sectional view taken along line XV-XV of FIG. 14.
FIG. 16 is a perspective view of a portion of the shift fork.
FIG. 17 is a cross-sectional view of a portion of a conventional transmission.

### DESCRIPTION OF EMBODIMENTS

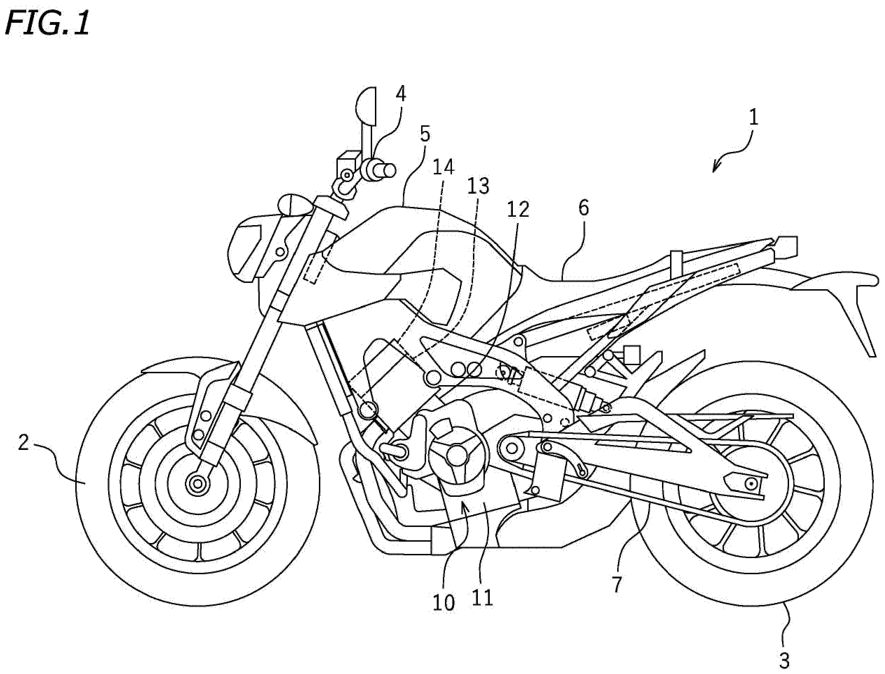

Embodiments will now be described with reference to the drawings. FIG. 1 is a side view of a motorcycle 1, which is an example of the vehicle. The motorcycle 1 includes a front wheel 2, a rear wheel 3, an internal combustion engine (hereinafter "engine") 10, a handle 4, a fuel tank 5, and a seat 6. The engine 10 is linked to the rear wheel 3 by a chain 7. The rear wheel 3 is driven by the engine 10. The engine 10, the rear wheel 3, and the chain 7 are an example of the "drive source", an example of the "driving wheel", and an example of the "power transmitting member", respectively.

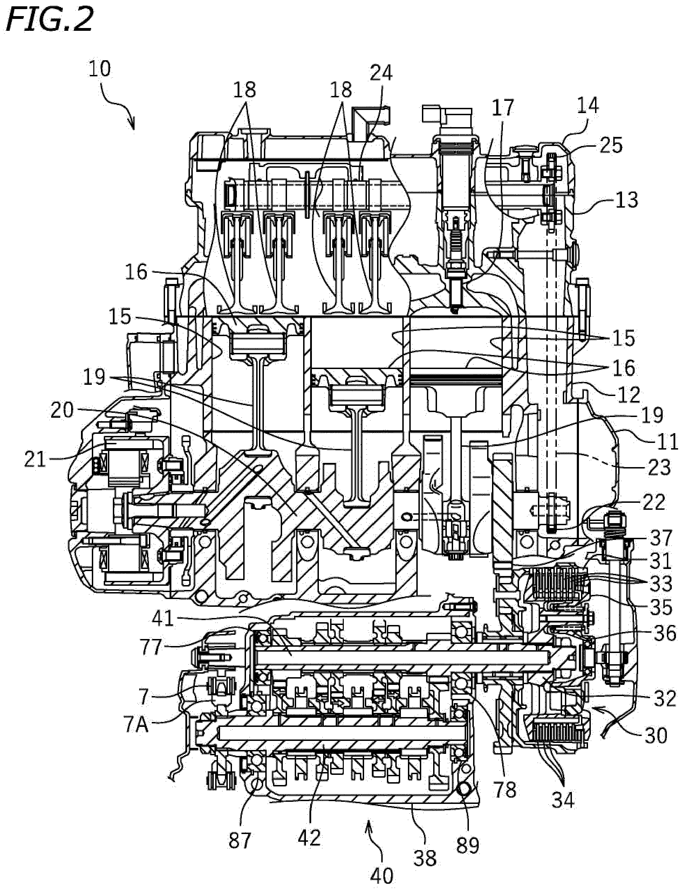

As shown in FIG. 2, the engine 10 includes a crankcase 11, a cylinder body 12 connected to the crankcase 11, a cylinder head 13 connected to the cylinder body 12, and a cylinder head cover 14 connected to the cylinder head 13. The engine 10 is a multi-cylinder engine including a plurality of cylinders 15. Herein, the engine 10 is a 3-cylinder engine. Note however that there is no limitation thereto. The engine 10 may be a single-cylinder engine including only one cylinder 15. The engine 10 may be a water-cooled engine or may be an air-cooled engine.

The cylinder head 13 is provided with an ignitor 17, an intake valve (not shown) and an exhaust valve 18. The cylinders 15 are provided inside the cylinder body 12. Pistons 16 are accommodated inside the cylinders 15. The pistons 16 are linked to a crankshaft 20 via connecting rods 19. The crankshaft 20 is arranged inside the crankcase 11. The crankshaft 20 extends in the vehicle width direction. Herein, the crankshaft 20 extends leftward and rightward. A generator 21 is attached to the left end portion of the crankshaft 20. A sprocket 22 is attached to the right end portion of the crankshaft 20. A cam chain 23 is wound around the sprocket 22. Moreover, the cam chain 23 is wound around a sprocket 25 attached to a camshaft 24.

The motorcycle 1 includes a clutch 30. The clutch 30 is attached to a drive shaft 41. Herein, the clutch 30 is attached to the right end portion of the drive shaft 41. The clutch 30 includes a clutch housing 31 that is rotatably attached to the drive shaft 41, a clutch boss 32 that is unrotatably attached to the drive shaft 41, a plurality of first clutch plates 33 that are provided in the clutch housing 31, a plurality of second clutch plates 34 that are provided on the clutch boss 32, and a pressure plate 35 arranged rightward of the first clutch plates 33 and the second clutch plates 34. The pressure plate 35 is configured to be movable in the axial direction of the drive shaft 41 and is urged leftward by a spring 36.

The clutch housing 31 is in mesh with a gear 37 provided on the crankshaft 20. The clutch housing 31 rotates together with the crankshaft 20. When the clutch 30 is connected, the torque of the crankshaft 20 is transmitted to the drive shaft 41, and the drive shaft 41 is driven by the crankshaft 20. When the clutch 30 is disconnected, the transmission of the torque from the crankshaft 20 to the drive shaft 41 is cut off.

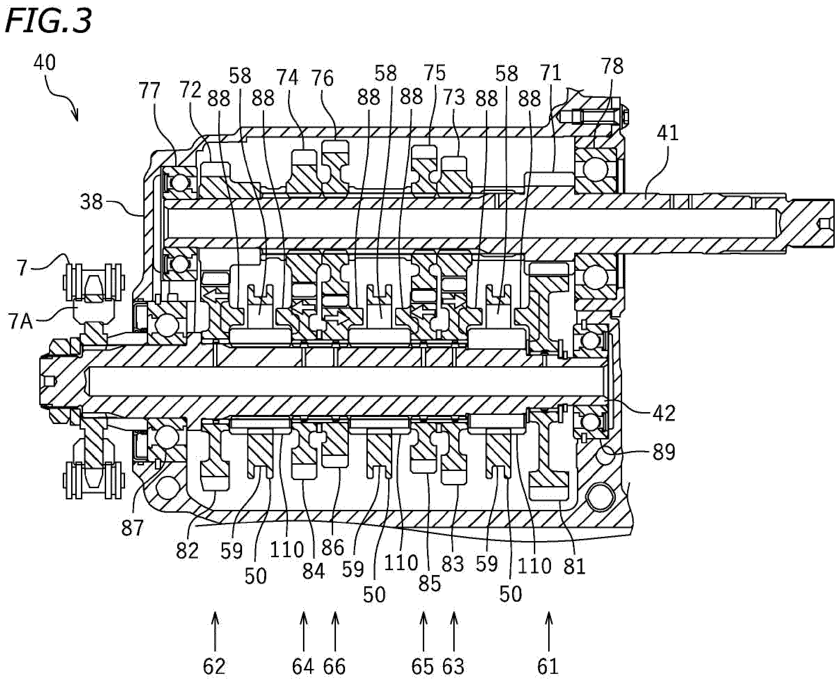

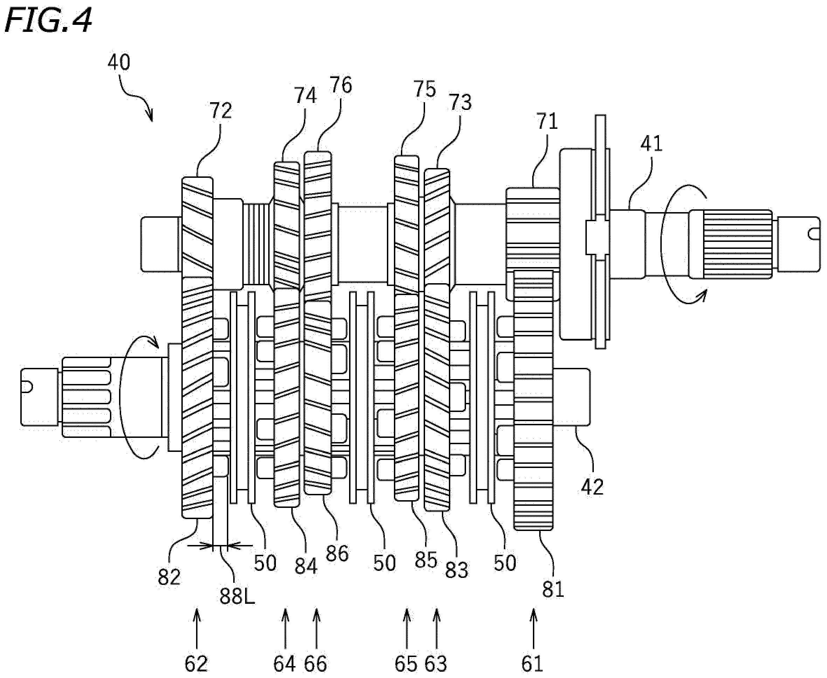

The motorcycle 1 includes a transmission 40. As shown in FIG. 3 and FIG. 4, the transmission 40 includes a transmission case 38, the drive shaft 41, a driven shaft 42, a plurality of drive gears 71 to 76, a plurality of driven gears 81 to 86, and a plurality of slide rings 50. The transmission case 38 is formed integral with the crankcase 11. The drive shaft 41 and the driven shaft 42 are arranged parallel to the crankshaft 20. The drive shaft 41 and the driven shaft 42 are arranged parallel to each other. In the following description, the axial direction of the drive shaft 41 and the driven shaft 42 may be referred to simply as the "axial direction". As shown in FIG. 3, a sprocket 7A with the chain 7 wound around is attached to the driven shaft 42.

In the present embodiment, the drive shaft 41 corresponds to the "first rotating shaft", and the driven shaft 42 corresponds to the "second rotating shaft". The drive gears 71 to 76 correspond to the "first gear", and the driven gears 81 to 86 correspond to the "second gear". The slide rings 50 correspond to the "annular member". The slide rings 50 are arranged concentric with the driven shaft 42. The slide rings 50 are not in mesh with the first gears 71 to 76 attached to the drive shaft 41. The slide rings 50 are not in mesh with the second gears 81 to 86 attached to the driven shaft 42.

As shown in FIG. 3, the drive shaft 41 is rotatably supported by a bearing 77 and a bearing 78. The driven shaft 42 is rotatably supported by a bearing 87 and a bearing 89. The bearings 77, 78, 87 and 89 are secured to the transmission case 38.

In the present embodiment, the transmission 40 is a stepped transmission having six speeds. Note however that the number of speeds of the transmission 40 is not limited to six. The transmission 40 includes the drive gears 71 to 76 for the first to sixth speeds. The drive gears 71 to 76 are attached to the drive shaft 41 so as to be unrotatable and axially unmovable relative to the drive shaft 41. The drive gears 71 to 76 are configured so as to rotate together with the drive shaft 41. The diameters of the drive gears 71 to 76 increase in this order. That is, diameter of first-speed drive gear 71 < diameter of second-speed drive gear 72 < diameter of third-speed drive gear 73 < diameter of fourth-speed drive gear 74 < diameter of fifth-speed drive gear 75 < diameter of sixth-speed drive gear 76.

The transmission 40 includes driven gears 81 to 86 for the first speed to the sixth speed. The driven gears 81 to 86 are attached to the driven shaft 42 so as to be rotatable and axially unmovable relative to the driven shaft 42. The driven gears 81 to 86 are configured so that they can idle on the driven shaft 42. The diameters of the driven gears 81 to 86 decrease in this order. That is, diameter of first-speed driven gear 81 > diameter of second-speed driven gear 82 > diameter of third-speed driven gear 83 > diameter of fourth-speed driven gear 84 > diameter of fifth-speed driven gear 85 > diameter of sixth-speed driven gear 86.

The drive gears 71 to 76 for the first speed to the sixth speed are in mesh with the driven gears 81 to 86 for the first speed to the sixth speed, respectively, thereby forming transmission gear pairs 61 to 66 for the first speed to the sixth speed, respectively. The reduction ratios of the transmission gear pairs 61 to 66 for the first speed to the sixth speed decrease in this order. That is, reduction ratio of first transmission gear pair 61 > reduction ratio of second transmission gear pair 62 > reduction ratio of third transmission gear pair 63 > reduction ratio of fourth transmission gear pair 64 > reduction ratio of fifth transmission gear pair 65 > reduction ratio of sixth transmission gear pair 66.

The slide rings 50 are attached to the driven shaft 42 so as to be unrotatable and axially movable relative to the driven shaft 42. The slide rings 50 are configured so as to rotate together with the driven shaft 42. In the present embodiment, three slide rings 50 are attached to the driven shaft 42. The left slide ring 50 is arranged between the second-speed driven gear 82 and the fourth-speed driven gear 84. The middle slide ring 50 is arranged between the sixth-speed driven gear 86 and the fifth-speed driven gear 85. The right slide ring 50 is arranged between the third-speed driven gear 83 and the first-speed driven gear 81.

As shown in FIG. 3, while the drive gears 71 to 76 do not include dogs, the driven gears 81 to 86 include dogs 88 protruding in the axial direction. The dogs 88 of the driven gears 81 to 86 protrude toward the slide rings 50. The dogs 88 are an example of the "engagement protruding portion".

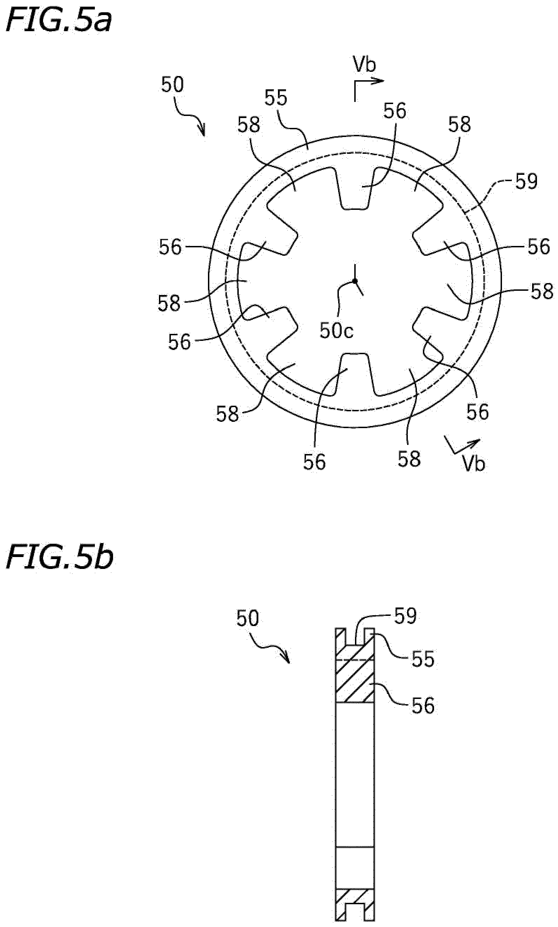

While the configurations of the three slide rings 50 may be different from each other, they have the same configuration herein. Next, referring to FIG. 5a and FIG. 5b, the configuration of the slide rings 50 will be described.

FIG. 5a is a front view of the slide ring 50, and FIG. 5b is a cross-sectional view taken along line Vb-Vb of FIG. 5a. As shown in FIG. 5a, the slide ring 50 includes an annular portion 55 concentric with the driven shaft 42, and a plurality of protruding portions 56 extending radially inward from the annular portion 55. The protruding portions 56 are arranged next to each other in the circumferential direction. The slide ring 50 includes engagement holes 58, delimited by the annular portion 55 and the protruding portions 56, into which the dogs 88 are inserted. Herein, the slide ring 50 includes six engagement holes 58. The radially outward end of the engagement holes 58 is delimited by the annular portion 55. The opposing ends of the engagement holes 58 in the circumferential direction are delimited by protruding portions 56. The radially inward end of the engagement holes 58 is open. The engagement holes 58 are through holes extending in the axial direction of the slide ring 50. The engagement holes 58 are an example of the "engagement depressed portion".

As shown in FIG. 5b, a groove 59 is formed on the outer circumferential surface of the slide ring 50. The groove 59 is depressed radially inward and extends in the circumferential direction.

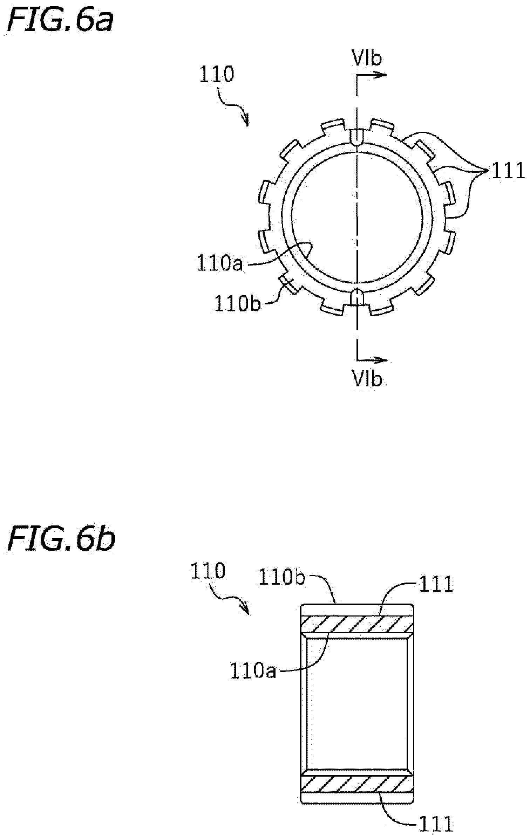

As shown in FIG. 3, a cylindrical collar 110 is interposed between the slide ring 50 and the driven shaft 42. The slide ring 50 is attached to the driven shaft 42 with the collar 110 therebetween. FIG. 6a is a front view of the collar 110, and FIG. 6b is a cross-sectional view taken along line Vlb-Vlb of FIG. 6a. The collar 110 includes an inner circumferential portion 110a, which engages with the driven shaft 42 so as to be unrotatable and axially unmovable relative to the driven shaft 42, and an outer circumferential portion 110b including a plurality of depressed portions 111 formed thereon.

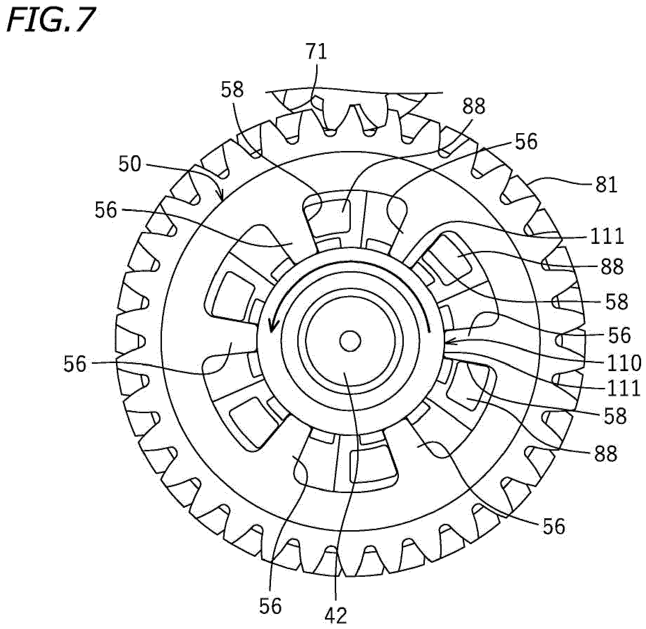

As shown in FIG. 7, the distal end portion of the protruding portion 56 of the slide ring 50 is inserted into the depressed portion 111 of the collar 110. The protruding portion 56 engages with the outer circumferential portion 110b of the collar 110. The slide ring 50 engages with the collar 110 so as to be axially slidable and circumferentially unslidable relative to the collar 110. The collar 110 is secured to the driven shaft 42 so as to rotate together with the driven shaft 42. Therefore, the slide ring 50 rotates together with the driven shaft 42 and the collar 110.

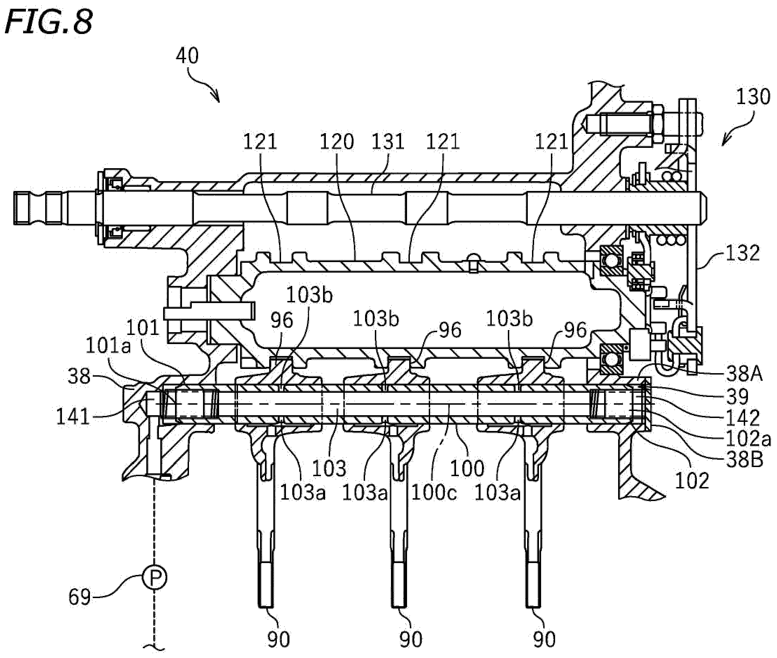

As shown in FIG. 8, the transmission 40 includes three shift forks 90, a shift fork shaft 100 that supports the shift forks 90, a shift drum 120 that engages with the shift forks 90, and a rotating mechanism 130 that rotates the shift drum 120 stepwise.

The shift drum 120 and the shift fork shaft 100 are arranged parallel to the drive shaft 41 and the driven shaft 42. The shift drum 120 includes grooves 121 that engage with protruding portions 96 of the shift forks 90. The rotating mechanism 130 includes a shift shaft 131 that is arranged parallel to the shift drum 120, and an arm 132 that transmits the rotation of the shift shaft 131 to the shift drum 120. Note that the shift drum 120 and the rotating mechanism 130 may be those that have been well known in the art. Since the configurations of the shift drum 120 and the rotating mechanism 130 are well known in the art, they will not be described below.

Although the details will be described later, the shift forks 90 are in engagement with grooves 59 of the slide rings 50. As the shift drum 120 rotates, the shift forks 90 move leftward or rightward along the grooves 121 of the shift drum 120. Together with this, the slide rings 50 in engagement with the shift forks 90 move leftward or rightward. The shift forks 90 are attached to the shift fork shaft 100 so as to be axially movable relative to the shift fork shaft 100, and are configured to axially move the slide rings 50.

As shown in FIG. 3, the right slide ring 50 is arranged leftward of the first-speed driven gear 81. When this slide ring 50 moves rightward, the dogs 88 of the driven gear 81 are inserted into the engagement holes 58 of the slide ring 50. The driven gear 81 is always rotating since it is in mesh with the drive gear 71. Therefore, as shown in FIG. 7, the dogs 88 revolve around the center of the driven shaft 42, and are in contact with the protruding portions 56 of the slide ring 50. As the protruding portions 56 are pushed by the dogs 88, power is transmitted from the driven gear 81 to the slide ring 50, and the slide ring 50 rotates together with the driven gear 81. As the dogs 88 engage with the engagement holes 58, power is transmitted from the drive shaft 41 to the driven shaft 42 via the first-speed transmission gear pair 61, thus driving the driven shaft 42. Although details will be omitted, this similarly applies to the second-speed to sixth-speed transmission gear pairs 62 to 66.

With the transmission 40 according to the present embodiment, oil can be supplied directly to the slidable portion of each shift fork 90 that slides on the slide ring 50 through the shift fork shaft 100 and the shift fork 90. Next, a detailed configuration of the shift fork shaft 100 and the shift forks 90 will be described.

First, the shift fork shaft 100 will be described. As shown in FIG. 8, the opposite end portions of the shift fork shaft 100 are open. Specifically, a first opening 101a, which is open leftward, is formed at a first end portion 101 of the shift fork shaft 100. A second opening 102a, which is open rightward, is formed at a second end portion 102 of the shift fork shaft 100. The first opening 101a and the second opening 102a are open in the axial direction of the shift fork shaft 100. The second opening 102a is open in the opposite way in the axial direction to the first opening 101a. An oil supply path 103 extends in the axial direction from the first opening 101a to the second opening 102a inside the shift fork shaft 100.

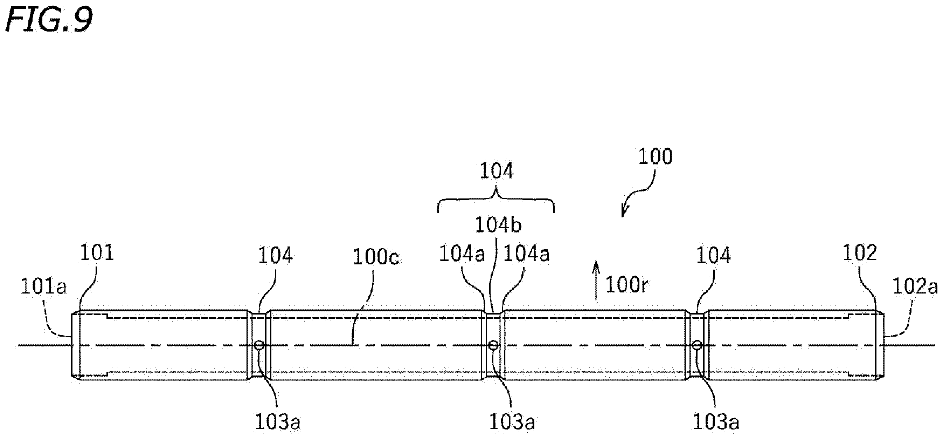

FIG. 9 is a plan view of the shift fork shaft 100. The shift fork shaft 100 includes circumferential grooves 104 each making a complete round around the shift fork shaft 100. The circumferential groove 104 is formed in such a shape that the width thereof increases while extending outward 100r in the radial direction of the shift fork shaft 100. As seen on a cross section including the axial line 100c of the shift fork shaft 100, the circumferential groove 104 includes a bottom surface 104b that is parallel to the axial line 100c of the shift fork shaft 100, and an inclined surface 104a that is inclined relative to the bottom surface 104b so as to extend away from the bottom surface 104b while extending outward 100r in the radial direction of the shift fork shaft 100. The number of the circumferential grooves 104 is equal to the number of the shift forks 90. In the present embodiment, since the transmission 40 includes three shift forks 90, there are three circumferential grooves 104 formed on the shift fork shaft 100.

As shown in FIG. 8, the shift fork shaft 100 includes oil supply holes 103a extending in the radial direction. Each oil supply hole 103a is open on the bottom surface 104b of the circumferential groove 104 (see FIG. 9). The oil supply hole 103a connects between the oil supply path 103 and the circumferential groove 104. The shift fork shaft 100 also includes other oil supply holes 103b that are located on the opposite side from the oil supply holes 103a with respect to the axial line 100c. Each oil supply hole 103b extends also in the radial direction and connects between the oil supply path 103 and the circumferential groove 104.

The shift fork shaft 100 is supported on the transmission case 38. The transmission case 38 includes a first hole portion 141 and a second hole portion 142. The first end portion 101 of the shift fork shaft 100 is inserted into the first hole portion 141. The second end portion 102 of the shift fork shaft 100 is inserted into the second hole portion 142.

The first hole portion 141 communicates with the oil supply path 103 inside the shift fork shaft 100 through the first opening 101a. The first hole portion 141 communicates also with an oil pump 69 for supplying oil. Although not shown in the drawings, an oil pan for storing oil is provided at the bottom of the crankcase 11. Oil stored in the oil pan is supplied to the first hole portion 141 by the oil pump 69. The second hole portion 142 communicates with the oil supply path 103 through the second opening 102a.

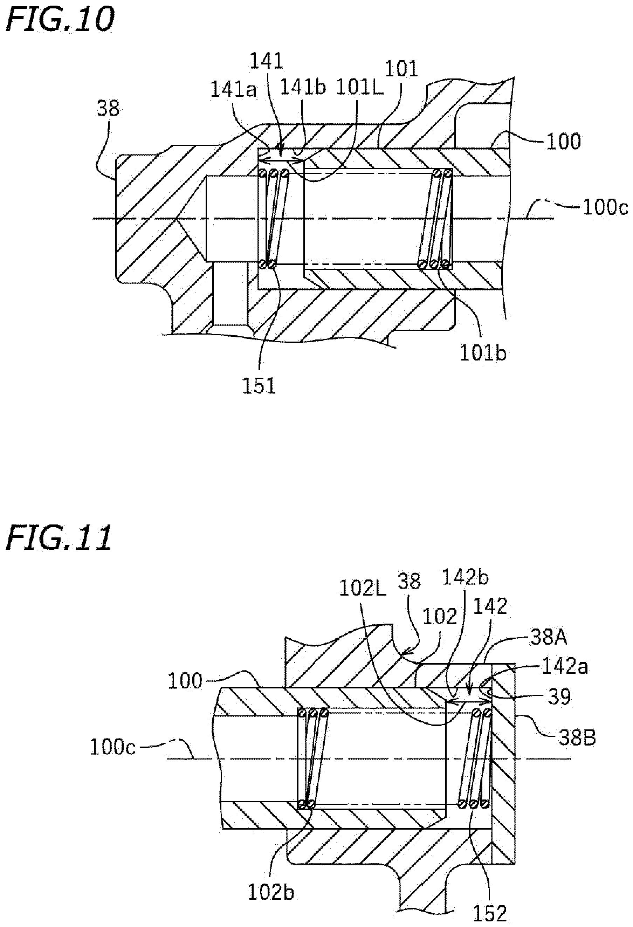

As shown in FIG. 10, the first hole portion 141 includes a first far-end wall portion 141a that is perpendicular to the axial direction of the shift fork shaft 100, and a first circumferential wall portion 141b that extends in the axial direction from the first far-end wall portion 141a.

As shown in FIG. 8, the transmission case 38 includes a case body 38A and a lid member 38B. The case body 38A includes a through hole 39 that connects between the inside and the outside of the transmission case 38. The lid member 38B is secured to the case body 38A, and covers the through hole 39. While there is no particular limitation to the method for securing the lid member 38B to the case body 38A, it may be welding, for example. The second hole portion 142 includes the through hole 39 and the lid member 38B. As shown in FIG. 11, the second hole portion 142 includes a second far-end wall portion 142a that is perpendicular to the axial direction of the shift fork shaft 100, and a second circumferential wall portion 142b that extends in the axial direction from the second far-end wall portion 142a. The second far-end wall portion 142a is the inner surface of the lid member 38B. The second circumferential wall portion 142b is the inner circumferential surface of the through hole 39 of the case body 38A.

As shown in FIG. 10, at least a portion of a first spring 151 is arranged inside the first hole portion 141. At least a portion of the first spring 151 is interposed between the first far-end wall portion 141a and the first end portion 101 of the shift fork shaft 100. In the present embodiment, a stepped surface 101b, which supports the right end portion of the first spring 151, is formed inside the first end portion 101 of the shift fork shaft 100. The right end portion of the first spring 151 is supported on the stepped surface 101b. The left end portion of the first spring 151 is supported on the first far-end wall portion 141a. In the present embodiment, the first spring 151 is a compression coil spring. The first spring 151 urges the shift fork shaft 100 rightward. Note however that there is no limitation as long as the first spring 151 urges the shift fork shaft 100 toward the second hole portion 142. The first spring 151 is not limited to a compression coil spring.

As shown in FIG. 11, at least a portion of a second spring 152 is arranged inside the second hole portion 142. At least a portion of the second spring 152 is interposed between the second far-end wall portion 142a and the second end portion 102 of the shift fork shaft 100. In the present embodiment, a stepped surface 102b, which supports the left end portion of the second spring 152, is formed inside the second end portion 102 of the shift fork shaft 100. The left end portion of the second spring 152 is supported on the stepped surface 102b. The right end portion of the second spring 152 is supported on the second far-end wall portion 142a. In the present embodiment, the second spring 152 is a compression coil spring. The second spring 152 urges the shift fork shaft 100 leftward. Note however that there is no limitation as long as the second spring 152 urges the shift fork shaft 100 toward the first hole portion 141. The second spring 152 is not limited to a compression coil spring.

The first spring 151 and the second spring 152 are an example of the urging member that keeps the shift fork shaft 100 in a neutral position where the shift fork shaft 100 is spaced apart from the first far-end wall portion 141a and the second far-end wall portion 142a. FIG. 8 shows a state where the shift fork shaft 100 is in the neutral position. The shift fork shaft 100 being in the neutral position can move either leftward or rightward. When the shift fork shaft 100 moves leftward, the first spring 151 and the second spring 152 urge the shift fork shaft 100 rightward, and when the shift fork shaft 100 moves rightward, the first spring 151 and the second spring 152 urge the shift fork shaft 100 leftward. In other words, when the shift fork shaft 100 moves from the neutral position toward the first hole portion 141, the first spring 151 and the second spring 152 urge the shift fork shaft 100 toward the second hole portion 142, and when the shift fork shaft 100 moves from the neutral position toward the second hole portion 142, the first spring 151 and the second spring 152 urge the shift fork shaft 100 toward the first hole portion 141.

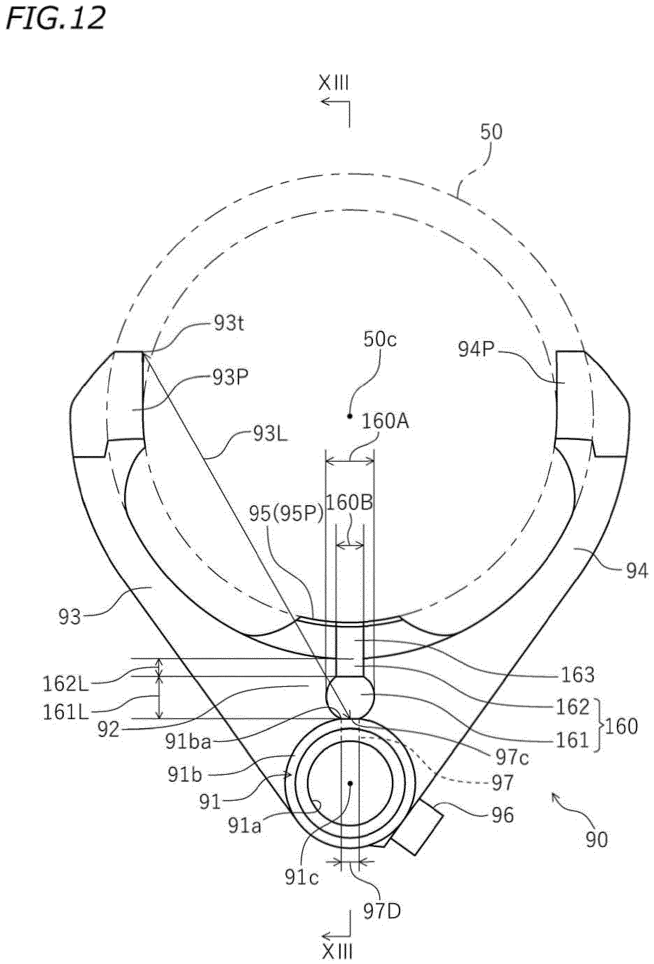

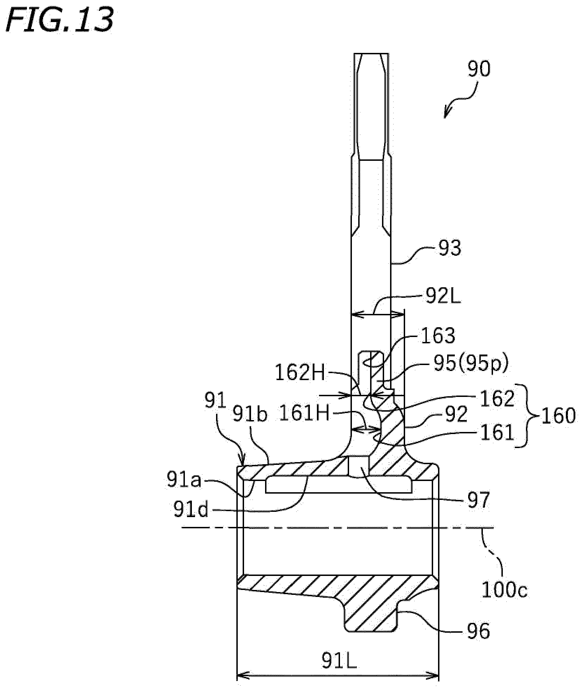

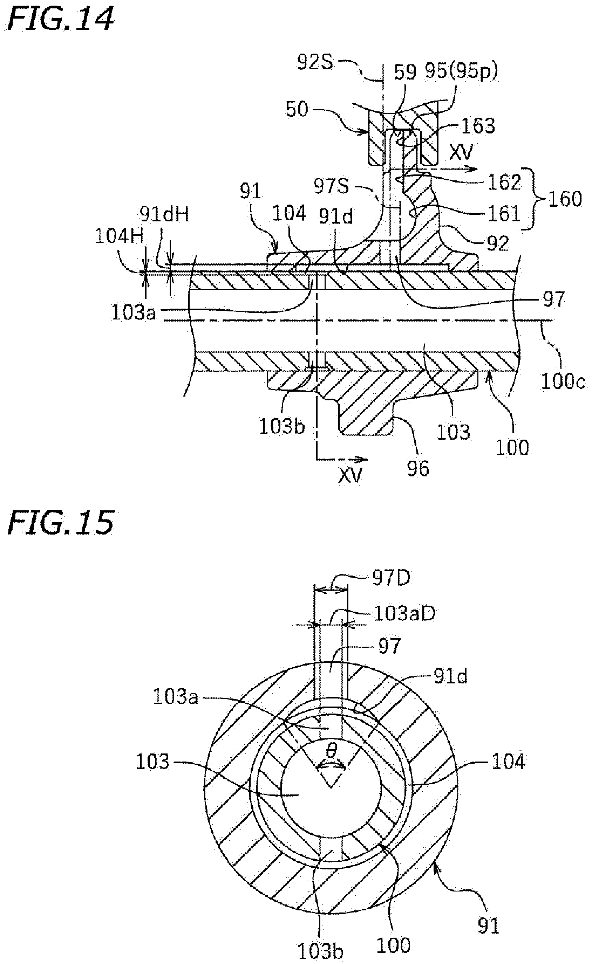

Next, the configuration of the shift forks 90 will be described. FIG. 12 is a front view of the shift forks 90. FIG. 13 is a cross-sectional view taken along line XIII-XIII of FIG. 12. FIG. 14 is an enlarged cross-sectional view of a portion of the shift fork shaft 100 and the shift fork 90. FIG. 15 is a cross-sectional view taken along line XV-XV of FIG. 14. As shown in FIG. 12, the shift fork 90 includes a cylindrical boss portion 91 into which the shift fork shaft 100 is inserted, a base plate portion 92 extending from the boss portion 91 toward the slide ring 50, a first arm portion 93 and a second arm portion 94 extending from the base plate portion 92 toward the side of the slide ring 50, and a slidable portion 95 extending from the base plate portion 92 outward in the radial direction of the boss portion 91. The shift fork 90 also includes the protruding portion 96 that engages with the groove 121 of the shift drum 120. The second arm portion 94 is located on the opposite side from the first arm portion 93 with respect to the slide ring 50. The slidable portion 95 is provided on a portion of the base plate portion 92 between the first arm portion 93 and the second arm portion 94.

As shown in FIG. 13, a dimension 91L of the boss portion 91 in the axial direction is larger than a dimension 92L of the base plate portion 92 in the axial direction. 91 L>92L.

The axial line of the boss portion 91 coincides with the axial line 100c of the shift fork shaft 100. In the following description, the axial line of the boss portion 91 will be denoted also by designation 100c. The boss portion 91 includes an inner circumferential surface 91a and an outer circumferential surface 91b. The boss portion 91 includes an oil hole 97 extending in the radial direction of the boss portion 91. The oil hole 97 runs through the boss portion 91 from the inner circumferential surface 91a to the outer circumferential surface 91b. As shown in FIG. 12, a portion 91ba of the outer circumferential surface 91b where the oil hole 97 is formed is a perpendicular surface that is perpendicular to the radial direction of the boss portion 91. As shown in FIG. 15, the oil hole 97 communicates with the oil supply path 103 of the shift fork shaft 100.

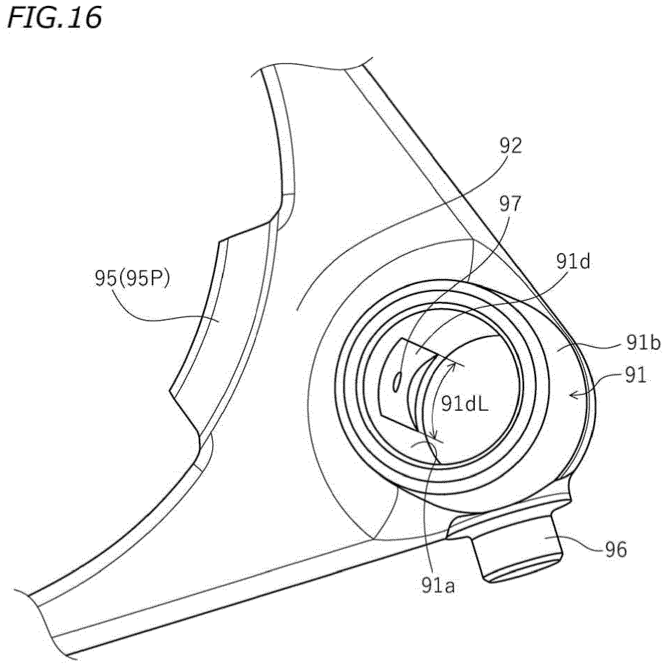

A depressed portion 91d is formed on the inner circumferential surface 91a of the boss portion 91. As shown in FIG. 13, the depressed portion 91d extends in the axial direction of the boss portion 91. As shown in FIG. 16, the depressed portion 91d is formed to extend in the circumferential direction over an extent of 180° or less. Herein, the depressed portion 91d is formed to extend in the circumferential direction over an extent of 90° or less the inner circumferential surface 91a of the boss portion 91. Note however that there is no particular limitation to the circumferential extent of the depressed portion 91d. The depressed portion 91d may be formed over an extent of 45° to 90°, or over an extent of 30° to 90°, around the center of the boss portion 91. As shown in FIG. 15, as seen on a cross section that is perpendicular to the axial direction of the boss portion 91, the depressed portion 91d is formed in a crescent shape. Note that designation θ represents the angle of the depressed portion 91d around the center of the boss portion 91.

As shown in FIG. 14, the depressed portion 91d overlaps with the circumferential groove 104 of the shift fork shaft 100. In other words, at least a portion of the depressed portion 91d is located rightward relative to the left end portion of the circumferential groove 104 and leftward relative to the right end portion of the circumferential groove 104.

A circumferential dimension 91dL of the depressed portion 91d (see FIG. 16) is larger than a diameter 103aD of the oil supply hole 103a of the shift fork shaft 100 (see FIG. 15). The circumferential dimension 91dL of the depressed portion 91d is larger than a diameter 97D of the oil hole 97 of the boss portion 91. The diameter 97D of the oil hole 97 of the boss portion 91 is larger than the diameter 103aD of the oil supply hole 103a of the shift fork shaft 100. As shown in FIG. 14, a depth 91dH of the depressed portion 91d is larger than a depth 104H of the circumferential groove 104 of the shift fork shaft 100. Note however that these dimensions are merely illustrative, and there is no particular limitation thereto.

As shown in FIG. 12 and FIG. 13, the base plate portion 92 includes a depressed portion 160 that is depressed in the axial direction of the boss portion 91. As shown in FIG. 12, the depressed portion 160 is located outward in the radial direction of the boss portion 91 relative to the oil hole 97. The depressed portion 160 extends from the oil hole 97 toward the slidable portion 95. The depressed portion 160 extends from the oil hole 97 toward the slide ring 50.

The depressed portion 160 includes a first depressed portion 161 that is located outward in the radial direction of the boss portion 91 relative to the oil hole 97, and a second depressed portion 162 that extends from the first depressed portion 161 toward the slidable portion 95. The first depressed portion 161 is formed in a hemispherical shape. The second depressed portion 162 extends straight in the radial direction of the boss portion 91. The second depressed portion 162 extends along a straight line (not shown) that connects between a center 91c of the boss portion 91 and a center 50c of the slide ring 50. While there is no particular limitation to the cross-sectional shape of the second depressed portion 162, the contour of the second depressed portion 162 (specifically, the contour as seen on a cross section perpendicular to a straight line that connects together the center 91c of the boss portion 91 and the center 50c of the slide ring 50) is formed in an arc shape in the present embodiment.

As shown in FIG. 13, the first depressed portion 161 is deeper than the second depressed portion 162. A depth 161H of the first depressed portion 161 is deeper than a depth 162H of the second depressed portion 162. 161H>162H. The depth 161H of the first depressed portion 161 is the maximum depth of the depressed portion 160. The maximum depth 161H of the depressed portion 160 is three times or more of the radius of the oil hole 97 of the boss portion 91. In other words, the maximum depth 161H of the depressed portion 160 is 1.5 times or more of the diameter 97D of the oil hole 97 (see FIG. 12). 161H≥1.5×97D.

As shown in FIG. 12, a dimension 161L of the first depressed portion 161 in the radial direction of the boss portion 91 is larger than a dimension 162L of the second depressed portion 162 in the radial direction of the boss portion 91. 161L>162L. The dimension 161L of the first depressed portion 161 in the radial direction of the boss portion 91 is twice or more of the diameter 97D of the oil hole 97 of the boss portion 91. 161L≥2×97D. In the present embodiment, the dimension obtained by adding together the dimension 161L of the first depressed portion 161 and the dimension 162L of the second depressed portion 162 is equivalent to the dimension of the depressed portion 160 in the radial direction of the boss portion 91. The dimension 161L+162L of the depressed portion 160 in the radial direction of the boss portion 91 is smaller than a half of a dimension 93L from a center 97c of the oil hole 97 of the boss portion 91 to a distal end 93t of the first arm portion 93. 161L+162L<0.5×93L.

A maximum dimension 160A of the depressed portion 160 in a direction that is perpendicular to the radial direction and the axial direction of the boss portion 91 is twice or more of the diameter 97D of the oil hole 97 of the boss portion 91. 160A≥2×97D. A minimum dimension 160B of the depressed portion 160 in a direction that is perpendicular to the radial direction and the axial direction of the boss portion 91 is larger than the diameter 97D of the oil hole 97. 160B>97D.

As shown in FIG. 14, the slidable portion 95 of the shift fork 90 is formed in a plate shape. The slidable portion 95 includes a plate-shaped engagement plate portion 95P that extends from the base plate portion 92 toward the slide ring 50. The engagement plate portion 95P is in engagement with the groove 59 of the slide ring 50. As shown in FIG. 12, the engagement plate portion 95P includes another depressed portion 163 that is depressed in the axial direction of the boss portion 91. The depressed portion 163 extends from the depressed portion 160 outward in the radial direction of the boss portion 91. The depressed portion 163 extends from the depressed portion 160 toward the slide ring 50. The second depressed portion 162 and the depressed portion 163 extend straight along the same straight line. Note however that there is no particular limitation thereto.

In addition to the engagement plate portion 95P, a distal end portion 93P of the first arm portion 93 and a distal end portion 94P of the second arm portion 94 are also in engagement with the groove 59 of the slide ring 50. The distal end portion 93P of the first arm portion 93 and the distal end portion 94P of the second arm portion 94 are other slidable portions that engage with the slide ring 50.

The configuration of the transmission 40 is as described above. Next, an example of the operation of the transmission 40 will be described. Herein, a gear-shifting operation from the second speed to the third speed will be described.

While in the second speed, the dogs 88 of the second-speed driven gear 82 are in engagement with the engagement holes 58 of the left slide ring 50 of FIG. 3 and FIG. 4. First, the clutch 30 is disconnected and the shift shaft 131 is operated so that the rotating mechanism 130 rotates the shift drum 120.

This rotation applies a rightward force to the left shift fork 90 of FIG. 8, and the left shift fork 90 moves rightward. In this process, when the shift fork shaft 100 is unable to move rightward, the left shift fork 90 does not start moving until a sufficiently large force is applied to the left shift fork 90. Then, after a sufficiently large force is applied to the left shift fork 90, the left shift fork 90 starts moving fast rightward on the shift fork shaft 100. Therefore, the gear-shifting operation is not smooth, and the gear-shifting feel is not desirable.

With the transmission 40 according to the present embodiment, however, the shift fork shaft 100 can move leftward and rightward. The left shift fork 90 can start moving rightward together with the shift fork shaft 100 even if the force applied to the left shift fork 90 is not sufficiently large. The left shift fork 90 can move rightward relative to the shift fork shaft 100 after moving rightward together with the shift fork shaft 100. The left shift fork 90 can move together with the shift fork shaft 100 when the left shift fork 90 starts moving, and can move over the shift fork shaft 100 after the left shift fork 90 has started moving fast. Therefore, the left shift fork 90 can move smoothly together with the rotation of the shift drum 120, thus realizing a smooth gear-shifting operation. It is possible to realize a desirable gear-shifting feel.

As the left shift fork 90 moves rightward, the left shift fork 90 moves the left slide ring 50 rightward. Thus, the dogs 88 of the second-speed driven gear 82 come off the engagement holes 58 of the left slide ring 50. The engagement between the second-speed driven gear 82 and the left slide ring 50 is disengaged.

The shift fork shaft 100 receives a leftward force from a second spring 102. Therefore, the shift fork shaft 100 moves rightward from the neutral position together with the left shift fork 90, and then returns to the neutral position by receiving a biasing force from the second spring 102.

As the shift drum 120 further rotates, a leftward force is applied to the right shift fork 90 of FIG. 8, and the right shift fork 90 moves leftward. The shift fork shaft 100 is in the neutral position, and can move leftward and rightward. The right shift fork 90 can start moving leftward together with the shift fork shaft 100, and then can move leftward relative to the shift fork shaft 100. The right shift fork 90 can move leftward together with the shift fork shaft 100 when the right shift fork 90 starts moving, and then can move leftward relative to the shift fork shaft 100. Therefore, the right shift fork 90 can move smoothly together with the rotation of the shift drum 120, thus realizing a smooth gear-shifting operation. It is possible to realize a desirable gear-shifting feel. As the right shift fork 90 moves leftward, the right shift fork 90 moves the right slide ring 50 of FIG. 3 and FIG. 4 leftward. Thus, the dogs 88 of the third-speed driven gear 83 slide into the engagement holes 58 of the right slide ring 50. The third-speed driven gear 83 and the right slide ring 50 engage with each other.

Then, the clutch 30 is connected. Thus, power is transmitted from the drive shaft 41 to the driven shaft 42 via the third-speed transmission gear pair 63. A gear-shifting operation from the second speed to the third speed has been described above. Although the description will be omitted, other gear-shifting operations are performed similarly.

Note that while there is no particular limitation to the amount by which the shift fork shaft 100 can move leftward and rightward from the neutral position, it may be such that the shift fork shaft 100 can move until engaging dogs 88 come completely off the engagement holes 58 or it may be such that the shift fork shaft 100 can move until non-engaging dogs 88 are completely inserted into the engagement holes 58. For example, where the shift fork shaft 100 is in the neutral position, designation 101L denotes the interval between the first end portion 101 of the shift fork shaft 100 and the first far-end wall portion 141a of the first hole portion 141 (see FIG. 10), and designation 102L denotes the interval between the second end portion 102 and the second far-end wall portion 142a of the second hole portion 142 (see FIG. 11). Designation 88L denotes the length of protrusion of the dogs 88 (see FIG. 4). Then, the interval 101L between the first end portion 101 of the shift fork shaft 100 and the first far-end wall portion 141a may be larger than the length of protrusion 88L of the dogs 88, and the interval 102L between the second end portion 102 of the shift fork shaft 100 and the second far-end wall portion 142a may be larger than the length of protrusion 88L of the dogs 88. This further improves the gear-shifting feel during a gear-shifting operation.

As described above, the transmission 40 according to the present embodiment, oil can be supplied directly to the slidable portion of each shift fork 90 that slides on the slide ring 50 through the shift fork shaft 100 and the shift fork 90. Next, how oil is supplied will be described.

As shown in FIG. 8, oil is supplied to the first hole portion 141 of the transmission case 38 from the oil pump 69. Oil is supplied from the first hole portion 141 to the oil supply path 103 inside the shift fork shaft 100. As shown in FIG. 14, oil in the oil supply path 103 of the shift fork shaft 100 flows into the circumferential groove 104 through the oil supply hole 103a and the oil supply hole 103b.

The circumferential groove 104 of the shift fork shaft 100 overlaps with the depressed portion 91d of the boss portion 91 of the shift fork 90. The depressed portion 91d is connected to the oil hole 97 of the boss portion 91. Therefore, oil in the circumferential groove 104 flows into the oil hole 97 through the depressed portion 91d.

The depressed portion 160 extending from the oil hole 97 to the slidable portion 95 is provided adjacent to the oil hole 97 of the shift fork 90. Oil having passed through the oil hole 97 is guided to the slidable portion 95 by the depressed portion 160. That is, oil having passed through the oil hole 97 flows into the depressed portion 160, and reaches the slidable portion 95 through the depressed portion 160.

The slidable portion 95 includes the depressed portion 163. Oil supplied to the slidable portion 95 is guided to a deep end portion of the groove 59 on the outer circumferential surface of the slide ring 50 through the depressed portion 163. Oil supplied to the slidable portion 95 diffuses across the entire groove 59 on the outer circumferential surface of the slide ring 50 as the slide ring 50 rotates. Thus, oil is supplied to the distal end portion 93P of the first arm portion 93 and the distal end portion 94P of the second arm portion 94 (see FIG. 12). That is, oil is supplied also to other slidable portions of the shift fork 90.

In the present embodiment, as shown in FIG. 14, the oil supply holes 103a and 103b of the shift fork shaft 100 and the oil hole 97 of the shift fork 90 are shifted from each other in the axial direction. The oil supply holes 103a and 103b and the circumferential groove 104 of the shift fork shaft 100 serve to guide oil radially outward from the oil supply path 103 of the shift fork shaft 100. The depressed portion 91d of the boss portion 91 of the shift fork 90 serves to guide oil in the axial direction.

As described above, oil is supplied directly to the slidable portion of the shift fork 90, thereby lubricating the shift fork 90 and the slide ring 50 with oil.

As described above, with the transmission 40 according to the present embodiment, the shift fork shaft 100 includes the oil supply path 103, the oil supply hole 103a and the oil supply hole 103b. The boss portion 91 of the shift fork 90 includes the depressed portion 91d, and the oil hole 97 that is connected to the depressed portion 91d. Thus, oil can be supplied directly to the slidable portion 95 of the shift fork 90 from the oil supply path 103 of the shift fork shaft 100.

According to the present embodiment, the depressed portion 91d of the boss portion 91 is formed to extend in the circumferential direction only over an extent of 180° or less. Therefore, it is possible to more easily machine the depressed portion 91d as compared with a case where the depressed portion 91d is formed to extend across the entire circumference. For example, by holding a rotating bite against the inner circumferential surface 91a of the boss portion 91, it is possible to machine the depressed portion 91d without rotating the shift fork 90.

Where the depressed portion 91d is formed only over a partial extent in the circumferential direction, the depressed portion 91d may become misaligned with the oil supply holes 103a and 103b of the shift fork shaft 100 if the circumferential position of the shift fork 90 on the shift fork shaft 100 is misaligned. If the depressed portion 91d and the oil supply holes 103a and 103b are misaligned with each other, oil may no longer be guided to the oil hole 97 of the boss portion 91 of the shift fork 90 from the oil supply holes 103a and 103b of the shift fork shaft 100.

According to the present embodiment, however, the circumferential groove 104, which is connected to the oil supply holes 103a and 103b, is formed on the outside of the shift fork shaft 100. Even if the circumferential position of the shift fork 90 on the shift fork shaft 100 is misaligned, the depressed portion 91d always overlaps with the circumferential groove 104. Therefore, with the depressed portion 91d, the oil supply holes 103a and 103b of the shift fork shaft 100 and the oil hole 97 of the boss portion 91 can communicate with each other through the circumferential groove 104. Thus, although the depressed portion 91d is formed only over a partial extent in the circumferential direction, oil can be desirably guided from the oil supply holes 103a and 103b of the shift fork shaft 100 to the oil hole 97 of the boss portion 91. As a result, oil can be desirably supplied to the slidable portion 95 of the shift fork 90.

As described above, according to the present embodiment, even if the circumferential position of the shift fork 90 on the shift fork shaft 100 is misaligned, the depressed portion 91d of the boss portion 91 and the oil supply holes 103a and 103b of the shift fork shaft 100 can communicate with each other. Therefore, when the shift fork 90 is assembled to the shift fork shaft 100, the shift fork 90 does not always need to be positioned with a high precision. Thus, it is possible to reduce time and cost required for the assembly of the shift fork 90.

Thus, with the transmission 40 according to the present embodiment, oil can be supplied directly to the slidable portion 95 of the shift fork 90 from the shift fork shaft 100, and it is possible to reduce time and cost for machining the inner circumferential surface 91a of the boss portion 91 of the shift fork 90.

While there is no limitation on the shape of the depressed portion 91d of the boss portion 91, the depressed portion 91d is formed in a crescent shape as seen on a cross section perpendicular to the axial direction of the boss portion 91, as shown in FIG. 15, in the present embodiment. According to the present embodiment, the depressed portion 91d can be machined by using a T-slot cutter, or the like. It is easy to machine the depressed portion 91d.

While there is no particular limitation to the dimension of the depressed portion 91d, the circumferential dimension 91dL of the depressed portion 91d (see FIG. 16) is larger than the diameter 103aD of the oil supply holes 103a and 103b of the shift fork shaft 100 (see FIG. 15) in the present embodiment. Thus, since the dimension of the depressed portion 91d is relatively large, oil can be supplied smoothly to the oil hole 97 of the boss portion 91 from the oil supply holes 103a and 103b of the shift fork shaft 100.

In the present embodiment, as shown in FIG. 15, the depressed portion 91d is formed to extend over an angle θ, which is in the range of 45° to 90°, around the center of the boss portion 91, as seen on a cross section perpendicular to the axial direction of the boss portion 91. According to the present embodiment, since the circumferential dimension of the depressed portion 91d is not too small, oil can be supplied smoothly from the oil supply holes 103a and 103b of the shift fork shaft 100 to the oil hole 97 of the boss portion 91. Since the circumferential dimension of the depressed portion 91d is not too large, it is easy to machine the depressed portion 91d.

While there is no particular limitation to the depth 91dH of the depressed portion 91d, the depth 91dH of the depressed portion 91d is deeper than the depth 104H of the circumferential groove 104 of the shift fork shaft 100, as shown in FIG. 14, according to the present embodiment. Since the depressed portion 91d is relatively deep, oil can be supplied smoothly to the oil hole 97 of the boss portion 91 from the oil supply holes 103a and 103b of the shift fork shaft 100.

While there is no particular limitation to the shape of the circumferential groove 104 of the shift fork shaft 100, the circumferential groove 104 includes the bottom surface 104b that is parallel to the axial line 100c of the shift fork shaft 100 and the inclined surface 104a that is inclined relative to the bottom surface 104b as seen on a cross section that includes the axial line 100c of the shift fork shaft 100 in the present embodiment. The oil supply holes 103a and 103b are formed on the bottom surface 104b that is parallel to the axial line 100c of the shift fork shaft 100. Therefore, it is easy to machine the oil supply holes 103a and 103b. Since the circumferential groove 104 has the inclined surface 104a that extends away from the bottom surface 104b while extending outward in the radial direction of the shift fork shaft 100, oil can be guided smoothly from the oil supply holes 103a and 103b to the depressed portion 91d of the shift fork 90.

Although the number of oil supply holes provided in the circumferential groove 104 of the shift fork shaft 100 may be one, two oil supply holes 103a and 103b are provided in the present embodiment. The oil supply hole 103a and the oil supply hole 103b are formed at opposite positions from each other. According to the present embodiment, a sufficient amount of oil can be supplied from the oil supply path 103 inside the shift fork shaft 100.

While there is no particular limitation to the size of the oil supply holes 103a and 103b of the shift fork shaft 100, the diameter 103aD of the oil supply holes 103a and 103b is smaller than the diameter 97D of the oil hole 97 of the boss portion 91, as shown in FIG. 15, in the present embodiment. The oil supply holes 103a and 103b of the shift fork shaft 100 are relatively small. In the present embodiment, oil supplied from the oil supply holes 103a and 103b of the shift fork shaft 100 is once guided to the circumferential groove 104, and then supplied to the depressed portion 91d and the oil hole 97 of the boss portion 91. Since oil is temporarily stored in the circumferential groove 104, even if the diameter 103aD of the oil supply holes 103a and 103b is smaller than the diameter 97D of the oil hole 97 of the boss portion 91, oil can be desirably supplied to the oil hole 97 of the boss portion 91.

According to the present embodiment, the movable members that detachably engage with the driven gears 81 to 86 are slide rings 50, and the slide rings 50 are not in mesh with the drive gears 71 to 76 attached to the drive shaft 41. According to the present embodiment, the slide rings 50 do not need teeth for meshing with the drive gears 71 to 76. Therefore, as compared with a case where the movable members are gears that mesh with the drive gears 71 to 76, it is possible to reduce the thickness of the movable members. Therefore, it is possible to reduce the size of the transmission 40.

In the present embodiment, the engagement protruding portions are the dogs 88 provided on the driven gears 81 to 86, and the engagement depressed portions are the engagement holes 58, which are through holes formed in the slide rings 50. Note however that the engagement depressed portions do not always need to be through holes. The engagement depressed portions may be bottomed holes. According to the present embodiment, however, the engagement depressed portions are the engagement holes 58, which are through holes, and it is possible to reduce the thickness of the slide rings 50. Therefore, it is possible to reduce the size of the transmission 40.

One embodiment has been described above. Note however that the embodiment described above is merely an example, and various other embodiments are possible.

In the embodiment described above, all of the dogs 88 are provided on the driven gears 81 to 86, and all of the slide rings 50 are supported on the driven shaft 42. However, all of the dogs 88 may be provided on the drive gears 71 to 76, and all of the slide rings 50 may be supported on the drive shaft 41. In such a case, the driven shaft 42 corresponds to the "first rotating shaft", the drive shaft 41 to the "second rotating shaft", the driven gears 81 to 86 to the "first gear", and the drive gears 71 to 76 to the "second gear".

The dogs 88 may be provided on at least one of the drive gears 71 to 76 and on at least one of the driven gears 81 to 86, and at least one slide ring 50 may be supported on each of the drive shaft 41 and the driven shaft 42. That is, a plurality of slide rings 50 may be distributed between the drive shaft 41 and the driven shaft 42.

The slide ring 50 does not always need to include the groove 59. For example, the shift fork 90 may be configured to push the side surface of the slide ring 50 in the axial direction.

In the embodiment described above, the shift fork 90 is configured to move the slide ring 50 in the axial direction. The "movable member" that is moved by the shift fork 90 is the slide ring 50. However, the "movable member" is not limited to the slide ring 50. The slide ring 50 may be absent. For example, at least one of the driven gears 81 to 86 may be movable in the axial direction (hereinafter, a gear that can move in the axial direction will be referred to as a moving gear), and the moving gear may include engagement depressed portions that engage with the dogs 88. Alternatively, the dogs 88 may be provided on at least one of the drive gears 71 to 76, and a drive gear that is adjacent to the drive gear with the dogs 88 provided thereon may be a moving gear, wherein the moving gear includes the engagement depressed portions that engage with the dogs 88. In such a case, the shift fork 90 is configured to move the moving gear in the axial direction. The moving gear corresponds to the "movable member".

In the embodiment described above, the dogs 88 corresponding to the "engagement protruding portion" are provided on the driven gears 81 to 86 corresponding to the "second gear". The engagement holes 58 corresponding to the "engagement depressed portion" are formed in the slide rings 50 corresponding to the "movable member". Note however that there is no limitation thereto. For example, the dogs 88 may be provided on the slide rings 50, and the engagement holes 58 may be formed in the driven gears 81 to 86. Thus, the engagement protruding portion may be provided on the movable member, and the engagement depressed portion may be formed in the second gear.

In the embodiment described above, the depressed portion 91d is formed in a crescent shape as seen on a cross section perpendicular to the axial direction of the boss portion 91. Note however that there is no particular limitation thereto. The shape of the depressed portion 91d as seen on the cross section is not limited to a crescent shape. The dimension of the depressed portion 91d described above is merely an example. There is no particular limitation to the dimension of the depressed portion 91d.

The groove that is connected to the oil supply holes 103a and 103b does not always need to be formed across the entire circumference of the shift fork shaft 100. Instead of the circumferential groove 104, a groove may be formed to extend in the circumferential direction only over a partial extent of the shift fork shaft 100. The groove of the shift fork shaft 100 is not always needed as long as the depressed portion 91d of the boss portion 91 overlaps with at least a portion of the oil supply hole 103a or at least a portion of the oil supply hole 103b.

The oil supply hole 103a and the oil supply hole 103b do not always need to be formed on opposite sides from each other. The number of oil supply holes provided in the circumferential groove 104 of the shift fork shaft 100 is not limited to two. The number of oil supply holes provided in the circumferential groove 104 may be one, or three or more. The plurality of oil supply holes formed in the circumferential groove 104 may have an equal inner diameter or may have different inner diameters.

The vehicle is not limited to the motorcycle 1. The vehicle may be a straddled vehicle other than a motorcycle. Note that a straddled vehicle refers to a vehicle that is straddled by a passenger. The vehicle is not limited to a straddled vehicle, but may be a vehicle of any other form. The vehicle may be an auto tricycle, an auto quadricycle, an ATV (All Terrain Vehicle), or a snowmobile, for example.

### REFERENCE SIGNS LIST

1: Motorcycle (vehicle), 3: Rear wheel (driving wheel), 7: Chain (power transmitting member), 10: Internal combustion engine (drive source), 40: Transmission, 41: Drive shaft (first rotating shaft), 42: Driven shaft (second rotating shaft), 50: Slide ring (movable member), 58: Engagement hole (engagement depressed portion), 71 to 76: Drive gear (first gear), 81 to 86: Driven gear (second gear), 88: Dog (engagement protruding portion), 90: Shift fork, 91: Boss portion, 91b: Inner circumferential surface of boss portion, 91d: Depressed portion, 92: Base plate portion, 93: First arm portion, 94: Second arm portion, 95: Slidable portion, 97: Oil hole, 100: Shift fork shaft, 103: Oil supply path, 103a: Oil supply hole, 104: Circumferential groove

## Claims

1. A transmission (40) comprising:
a first rotating shaft (41);
a second rotating shaft (42) arranged parallel to the first rotating shaft (41);
a first gear (71-76) attached to the first rotating shaft (41) so as to be unrotatable relative to the first rotating shaft (41);
a second gear (81-86) that is attached to the second rotating shaft (42) so as to be rotatable relative to the second rotating shaft (42) and axially unmovable relative to the second rotating shaft (42) and is in mesh with the first gear (71-76);
a movable member (50) that is attached to the second rotating shaft (42) so as to be unrotatable relative to the second rotating shaft (42) and axially movable relative to the second rotating shaft (42) and is adjacent to the second gear (81-86) in axial direction of the second rotating shaft (42);
a shift fork shaft (100) arranged parallel to the first rotating shaft (41) and the second rotating shaft (42); and
a shift fork (90) that includes a cylindrical boss portion (91) through which the shift fork shaft (100) is inserted and that is attached to the shift fork shaft (100) so as to be axially movable relative to the shift fork shaft (100) in axial direction of the shift fork shaft (100) and configured to move the movable member (50) in axial direction of the second rotating shaft (42), wherein:
one of the second gear (81-86) and the movable member (50) includes an engagement protruding portion (88) that protrudes in axial direction of the second rotating shaft (42);
the other one of the second gear (81-86) and the movable member (50) includes an engagement depressed portion (58) that is configured to detachably engage with the engagement protruding portion (88);
the shift fork shaft (100) includes an oil supply path (103) that is formed inside the shift fork shaft (100) and extends in the axial direction of the shift fork shaft (100), an oil supply hole (103a) that extends in radial direction of the shift fork shaft (100) so as to connect with the oil supply path (103);
the boss portion (91) includes an inner circumferential surface (91a), wherein a depressed portion (91d) is formed on the inner circumferential surface (91a); and
the depressed portion (91d) is formed to extend in a circumferential direction,
**characterized in that**
the shift fork shaft (100) includes a circumferential groove (104) that is formed on an outside of the shift fork shaft (100) so as to make a complete round around the shift fork shaft (100), the oil supply hole (103a) that extends in radial direction of the shift fork shaft (100) connects between the oil supply path (103) and the circumferential groove (104);
an oil hole (97) extends in radial direction of the boss portion (91) and is formed in the boss portion (91) of the shift fork (90);
the depressed portion (91d) is connected to the oil hole (97) formed on the inner circumferential surface (91a); and
the depressed portion (91d) is formed to extend in a circumferential direction over an extent of 180° or less of the inner circumferential surface (91a) and overlaps with the circumferential groove (104) of the shift fork shaft (100).

2. The transmission (40) according to claim 1, **characterized in that** the depressed portion (91d) is formed in a crescent shape as seen on a cross section perpendicular to the axial direction of the boss portion (91).

3. The transmission (40) according to claim 1 or 2, **characterized in that** a circumferential dimension (91dL) of the depressed portion (91d) is larger than a diameter (103aD) of the oil supply hole (103a) of the shift fork shaft (100).

4. The transmission (40) according to any one of claims 1 to 3, **characterized in that** as seen on a cross section perpendicular to the axial direction of the boss portion (91), the depressed portion (91d) is formed over an extent of 45° to 90° around a center of the boss portion (91).

5. The transmission (40) according to any one of claims 1 to 4, **characterized in that** a depth (91dH) of the depressed portion (91d) is deeper than a depth (104H) of the circumferential groove (104).

6. The transmission (40) according to any one of claims 1 to 5, **characterized in that** as seen on a cross section that includes an axial line (100c) of the shift fork shaft (100), the circumferential groove (104) includes a bottom surface (104b) that is parallel to the axial line (100c) of the shift fork shaft (100), and an inclined surface (104a) that is inclined relative to the bottom surface (104b) so as to extend away from the bottom surface (104b) while extending outward in the radial direction of the shift fork shaft (100); and
the oil supply hole (103a) is open on the bottom surface (104b).

7. The transmission (40) according to any one of claims 1 to 6, **characterized in that** the shift fork shaft (100) includes another oil supply hole (103b) extending in radial direction of the shift fork shaft (100) that is formed on an opposite side from the oil supply hole (103a) with respect to an axial line (100c) of the shift fork shaft (100) and connects between the oil supply path (103) and the circumferential groove (104).

8. The transmission (40) according to any one of claims 1 to 7, **characterized in that** a diameter (103aD) of the oil supply hole (103a) of the shift fork shaft (100) is smaller than a diameter (97D) of the oil hole (97) of the boss portion (91).

9. The transmission (40) according to any one of claims 1 to 8, **characterized in that**
the movable member (50) is an annular member arranged concentric with the second rotating shaft (42); and
the annular member is arranged to be not in mesh with the first gear (71-76) attached to the first rotating shaft (41).

10. The transmission (40) according to claim 9, **characterized in that** the engagement protruding portion (88) is formed on the second gear (81-86); and
the engagement depressed portion (58) is a through hole formed in the annular member.

11. A vehicle (1) comprising:
the transmission (40) according to any one of claims 1 to 10;
a drive source (10) that is linked to the first rotating shaft (41) and configured to drive the first rotating shaft (41);
a power transmitting member (7) that is linked to the second rotating shaft (42); and
a driving wheel (3) that is linked to the power transmitting member (7).

12. The vehicle according to claim 11, wherein said vehicle is a motorcycle (1) that includes a front wheel (2), a rear wheel (3) as the driven wheel, an internal combustion engine (10) as the drive source, and a chain (7) or a belt or a shaft as the power transmitting member.

## Patentansprüche

1. Ein Getriebe (40), das umfasst:
eine erste Drehwelle (41);
eine zweite Drehwelle (42), die parallel zur ersten Drehwelle (41) angeordnet ist;
ein erstes Zahnrad (71-76), das an der ersten Drehwelle (41) angebracht ist, so dass es relativ zur ersten Drehwelle (41) nicht drehbar ist;
ein zweites Zahnrad (81-86), das an der zweiten Drehwelle (42) angebracht ist, so dass es relativ zur zweiten Drehwelle (42) drehbar und relativ zur zweiten Drehwelle (42) axial nicht bewegbar ist und mit dem ersten Zahnrad (71-76) in Eingriff ist;
ein bewegbares Element (50), das an der zweiten Drehwelle (42) angebracht ist, so dass es relativ zur zweiten Drehwelle (42) nicht drehbar ist und relativ zur zweiten Drehwelle (42) axial bewegbar ist und in axialer Richtung der zweiten Drehwelle (42) benachbart zu dem zweite Zahnrad (81-86) ist;
eine Schaltgabelwelle (100), die parallel zu der ersten Drehwelle (41) und der zweiten Drehwelle (42) angeordnet ist; und
eine Schaltgabel (90), die einen zylindrischen Nabenabschnitt (91) beinhaltet, durch den die Schaltgabelwelle (100) eingesetzt ist, und die an der Schaltgabelwelle (100) angebracht ist, so dass sie relativ zur Schaltgabelwelle (100) in axialer Richtung der Schaltgabelwelle (100) axial bewegbar ist und konfiguriert ist, so dass sie das bewegbare Element (50) in axialer Richtung der zweiten Drehwelle (42) bewegt, wobei:
eines von dem zweiten Zahnrad (81-86) und dem bewegbaren Element (50) einen vorstehenden Eingriffsabschnitt (88) beinhaltet, der in axialer Richtung der zweiten Drehwelle (42) vorsteht;
das andere von dem zweiten Zahnrad (81-86) und dem bewegbaren Element (50) einen vertieften Eingriffsabschnitt (58) beinhaltet, der konfiguriert ist, so dass er lösbar mit dem vorstehenden Eingriffsabschnitt (88) in Eingriff kommt;
die Schaltgabelwelle (100) einen Ölzuführungspfad (103) beinhaltet, der innerhalb der Schaltgabelwelle (100) ausgebildet ist und sich in der axialen Richtung der Schaltgabelwelle (100) erstreckt, ein Ölzuführungsloch (103a), das sich in radialer Richtung der Schaltgabelwelle (100) erstreckt, um mit dem Ölzuführungspfad (103) verbunden zu sein;
der Nabenabschnitt (91) eine innere Umfangsfläche (91a) beinhaltet, wobei ein vertiefter Abschnitt (91d) an der inneren Umfangsfläche (91a) ausgebildet ist; und
der vertiefte Abschnitt (91d) ausgebildet ist, dass er sich in einer Umfangsrichtung erstreckt, **dadurch gekennzeichnet, dass**
die Schaltgabelwelle (100) eine Umfangsnut (104) beinhaltet, die an einer Außenseite der Schaltgabelwelle (100) ausgebildet ist, so dass diese eine vollständige Runde um
die Schaltgabelwelle (100) macht, das Ölzuführungsloch (103a), das sich in radialer Richtung der Schaltgabelwelle (100) erstreckt, verbindet zwischen dem Ölzuführungspfad (103) und der Umfangsnut (104) herstellt;
ein Ölloch (97), erstreckt sich in radialer Richtung des Nabenabschnitts (91) und ist in dem Nabenabschnitt (91) der Schaltgabel (90) ausgebildet;
der vertiefte Abschnitt (91d) ist mit dem Ölloch (97) verbunden, das an der inneren Umfangsfläche (91a) ausgebildet ist; und
der vertiefte Abschnitt (91d) ist ausgebildet, so dass er sich in einer Umfangsrichtung über einen Bereich von 180° oder weniger der inneren Umfangsfläche (91a) erstreckt und mit der Umfangsnut (104) der Schaltgabelwelle (100) überlappt.

2. Das Getriebe (40) gemäß Anspruch 1, **dadurch gekennzeichnet, dass** der vertiefte Abschnitt (91d) in einem Querschnitt senkrecht zur axialen Richtung des Nabenabschnitts (91) gesehen halbmondförmig ausgebildet ist.

3. Das Getriebe (40) gemäß Anspruch 1 oder 2, **dadurch gekennzeichnet, dass** eine Umfangsabmessung (91dL) des vertieften Abschnitts (91d) größer ist als ein Durchmesser (103aD) des Ölzuführungslochs (103a) der Schaltgabelwelle (100).

4. Das Getriebe (40) gemäß irgendeinem der Ansprüche 1 bis 3, **dadurch gekennzeichnet, dass** der vertiefte Abschnitt (91d) in einem Querschnitt senkrecht zur axialen Richtung des Nabenabschnitts (91) gesehen über eine Ausdehnung von 45° bis 90° um einen Mittelpunkt des Nabenabschnitts (91) herum ausgebildet ist.

5. Das Getriebe (40) gemäß irgendeinem der Ansprüche 1 bis 4, **dadurch gekennzeichnet, dass** eine Tiefe (91dH) des vertieften Abschnitts (91d) tiefer ist als eine Tiefe (104H) der Umfangsnut (104).

6. Das Getriebe (40) gemäß irgendeinem der Ansprüche 1 bis 5, **dadurch gekennzeichnet, dass** die Umfangsnut (104), gesehen in einem Querschnitt, der eine Axiallinie (100c) der Schaltgabelwelle (100) einschließt, eine Bodenfläche (104b), die parallel zu der Axiallinie (100c) der Schaltgabelwelle (100) verläuft und eine geneigte Fläche (104a), die relativ zu der Bodenfläche (104b) so geneigt ist, dass sie sich von der Bodenfläche (104b) weg erstreckt, während sie sich in der radialen Richtung der Schaltgabelwelle (100) nach außen erstreckt; und
das Ölzuführungsloch (103a) ist an der Bodenfläche (104b) offen.

7. Das Getriebe (40) gemäß irgendeinem der Ansprüche 1 bis 6, **dadurch gekennzeichnet, dass** die Schaltgabelwelle (100) eine weitere, sich in radialer Richtung der Schaltgabelwelle (100) erstreckende Ölzuführungsbohrung (103b) beinhaltet, die auf einer Seite, die dem Ölzuführungsloch (103a) gegenüberliegt, in Bezug auf eine axiale Linie (100c) der Schaltgabelwelle (100) ausgebildet ist und den Ölzuführungspfad (103) mit der Umfangsnut (104) verbindet.

8. Das Getriebe (40) gemäß irgendeinem der Ansprüche 1 bis 7, **dadurch gekennzeichnet, dass** ein Durchmesser (103aD) des Ölzuführungslochs (103a) der Schaltgabelwelle (100) kleiner ist als ein Durchmesser (97D) des Öllochs (97) des Nabenabschnitts (91).

9. Das Getriebe (40) gemäß irgendeinem der Ansprüche 1 bis 8, **dadurch gekennzeichnet, dass** das bewegbare Element (50) ein ringförmiges Element ist,
das konzentrisch zu der zweiten Drehwelle (42) angeordnet ist; und
das ringförmige Element angeordnet ist, um nicht mit dem ersten Zahnrad (71-76), das an der ersten Drehwelle (41) befestigt ist, in Eingriff zu stehen.

10. Das Getriebe (40) gemäß Anspruch 9, **dadurch gekennzeichnet, dass** der
vorstehende Eingriffsabschnitt (88) an dem zweiten Zahnrad (81-86) ausgebildet ist; und
der vertiefte Eingriffsabschnitt (58) ein Durchgangsloch ist, das in dem ringförmigen Element ausgebildet ist.

11. Ein Fahrzeug (1), das umfasst:
das Getriebe (40) gemäß irgendeinem der Ansprüche 1 bis 10;
eine Antriebsquelle (10), die mit der ersten Drehwelle (41) verbunden und konfiguriert ist, um die erste Drehwelle (41) anzutreiben;
ein Kraftübertragungselement (7), das mit der zweiten Drehwelle (42) verbunden ist; und
ein Antriebsrad (3), das mit dem Kraftübertragungselement (7) verbunden ist.

12. Das Fahrzeug gemäß Anspruch 11, wobei das Fahrzeug ein Motorrad (1) ist, das ein Vorderrad (2), ein Hinterrad (3) als angetriebenes Rad, einen Verbrennungsmotor (10) als Antriebsquelle und eine Kette (7) oder einen Riemen oder eine Welle als Kraftübertragungselement beinhaltet.

## Revendications

1. Transmission (40) comprenant :
un premier arbre tournant (41),
un second arbre tournant (42) disposé parallèlement au premier arbre tournant (41),
un premier pignon (71 à 76) fixé au premier arbre tournant (41) de façon à ne pas pouvoir tourner par rapport au premier arbre tournant (41),
un second pignon (81 à 86) qui est fixé au second arbre tournant (42) de façon à pouvoir tourner par rapport au second arbre tournant (42), qui ne peut pas se déplacer axialement par rapport au second arbre tournant (42) et qui est en prise avec le premier pignon (71 à 76),
un élément mobile (50) qui est fixé au second arbre tournant (42) de sorte à ne pas pouvoir tourner par rapport au second arbre tournant (42), qui est mobile axialement par rapport au second arbre tournant (42) et qui est adjacent au second pignon (81 à 86) dans la direction axiale du second arbre tournant (42),
un arbre de fourchette d'embrayage (100) disposé parallèlement au premier arbre tournant (41) et au second arbre tournant (42), et
une fourchette d'embrayage (90) qui inclut une partie bombée cylindrique (91) au travers de laquelle est inséré l'arbre de fourchette d'embrayage (100) et qui est fixée à l'arbre de fourchette d'embrayage (100) de sorte à pouvoir se déplacer axialement par rapport à l'arbre de fourchette d'embrayage (100) dans la direction axiale de l'arbre de fourchette d'embrayage (100), et qui est configurée pour déplacer l'élément mobile (50) dans la direction axiale du second arbre tournant (42), dans laquelle :
l'un du second pignon (81 à 86) et de l'élément mobile (50) inclut un organe saillant de mise en prise (88) qui dépasse dans la direction axiale du second arbre tournant (42),
l'autre du second pignon (81 à 86) et de l'élément mobile (50) inclut un organe en creux de mise en prise (58) qui est configuré pour s'engrener tout en étant libérable avec l'organe saillant de mise en prise (88),
l'arbre de fourchette d'embrayage (100) inclut un circuit d'alimentation en huile (103) qui est formé à l'intérieur de l'arbre de fourchette d'embrayage (100) et se déploie dans la direction axiale de l'arbre de fourchette d'embrayage (100), un alésage d'alimentation en huile (103a) qui s'étend dans une direction radiale de l'arbre de fourchette d'embrayage (100) de sorte à se relier au circuit d'alimentation en huile (103),
la partie bombée (91) inclut une surface circonférentielle interne (91a), une partie en creux (91d) étant formée sur la surface circonférentielle interne (91a), et
la partie en creux (91d) est formée pour s'étendre dans la direction circonférentielle,
**caractérisée en ce que :**
l'arbre de fourchette d'embrayage (100) inclut une rainure circonférentielle (104) qui est formée sur l'extérieur de l'arbre de fourchette d'embrayage (100) de sorte à réaliser un cycle complet autour de l'arbre de fourchette d'embrayage (100), l'alésage d'alimentation en huile (103a), qui s'étend dans la direction radiale de l'arbre de fourchette d'embrayage (100), établissant une liaison entre le circuit d'alimentation en huile (103) et la rainure circonférentielle (104),
un alésage d'huile (97) s'étend dans une direction radiale de la partie bombée (91) et est formé dans la partie bombée (91) de la fourchette d'embrayage (90),
la partie en creux (91d) est reliée à l'alésage d'huile (97) formé sur la surface circonférentielle interne (91a), et
la partie en creux (91d) est formée pour se déployer dans la direction circonférentielle sur une plage de 180 ° ou moins de la surface circonférentielle interne (91a) et chevauche la rainure circonférentielle (104) de l'arbre de fourchette d'embrayage (100).

2. Transmission (40) selon la revendication 1, **caractérisée en ce que** la partie en creux (91d) prend une forme de croissant comme on peut le voir sur une section transversale perpendiculaire à la direction axiale de la partie bombée (91).

3. Transmission (40) selon la revendication 1 ou la revendication 2, **caractérisée en ce que** la dimension circonférentielle (91dL) de la partie en creux (91d) est plus grande que le diamètre (103aD) de l'alésage d'alimentation en huile (103a) de l'arbre de fourchette d'embrayage (100).

4. Transmission (40) selon l'une quelconque des revendications 1 à 3, **caractérisée en ce que,** comme on peut le voir sur une section transversale perpendiculaire à la direction axiale de la partie bombée (91), la partie en creux (91d) est formée sur une plage allant de 45 ° à 90 ° autour du centre de la partie bombée (91).

5. Transmission (40) selon l'une quelconque des revendications 1 à 4, **caractérisée en ce que** la profondeur (91dH) de la partie en creux (91d) est plus importante que la profondeur (104H) de la rainure circonférentielle (104).

6. Transmission (40) selon l'une quelconque des revendications 1 à 4, **caractérisée en ce que,** comme on peut le voir sur une section transversale qui inclut l'axe (100c) de l'arbre de fourchette d'embrayage (100), la rainure circonférentielle (104) inclut une surface de fond (104b) qui est parallèle à l'axe (100c) de l'arbre de fourchette d'embrayage (100), ainsi qu'une surface inclinée (104a) qui est inclinée par rapport à la surface de fond (104b) de sorte à s'écarter de la surface de fond (104b) tout en se déployant vers l'extérieur dans la direction radiale de l'arbre de fourchette d'embrayage (100), et
l'alésage d'alimentation en huile (103a) est ouvert sur la surface de fond (104b).

7. Transmission (40) selon l'une quelconque des revendications 1 à 6, **caractérisée en ce que** l'arbre de fourchette d'embrayage (100) inclut un autre alésage d'alimentation en huile (103b) s'étendant dans la direction radiale de l'arbre de fourchette d'embrayage (100), lequel est formé sur le côté opposé à l'alésage d'alimentation en huile (103a) par rapport à l'axe (100c) de l'arbre de fourchette d'embrayage (100) et établit une liaison entre le circuit d'alimentation en huile (103) et la rainure circonférentielle (104).

8. Transmission (40) selon l'une quelconque des revendications 1 à 7, **caractérisée en ce que** le diamètre (103aD) de l'alésage d'alimentation en huile (103a) de l'arbre de fourchette d'embrayage (100) est plus petit que le diamètre (97D) de l'alésage d'huile (97) de la partie bombée (91).

9. Transmission (40) selon l'une quelconque des revendications 1 à 8, **caractérisée en ce que** l'élément mobile (50) est un élément annulaire concentrique au second arbre tournant (42), et
l'élément annulaire est disposé pour ne pas s'engrener avec le premier pignon (71 à 76) fixé au premier arbre tournant (41).

10. Transmission (40) selon la revendication 9, **caractérisée en ce que** l'organe saillant de mise en prise (88) est formé sur le second pignon (81 à 86), et
l'organe en creux de mise en prise (58) est un trou traversant formé dans l'élément annulaire.

11. Véhicule (1) comprenant :
une transmission (40) conforme à l'une quelconque des revendications 1 à 10,
une source d'entraînement (10) qui est reliée au premier arbre tournant (41) et qui est configurée pour entraîner le premier arbre tournant (41),
un élément de transmission de puissance (7) qui est relié au second arbre tournant (42), et
une roue d'entraînement (3) qui est reliée à l'élément de transmission de puissance (7).

12. Véhicule selon la revendication 11, ledit véhicule étant une motocyclette (1) qui inclut une roue avant (2), une roue arrière (3) utilisée comme roue entraînée, un moteur à combustion interne (10) utilisé comme source d'entraînement et une chaîne (7) ou une courroie ou un arbre utilisé comme élément de transmission de puissance.
